Europäisches Patentamt

European Patent Office

Office européen des brevets

(19)

(11) Publication number : **0 611 071 A1**

## (12) EUROPEAN PATENT APPLICATION

(21) Application number : 94300625.4

(22) Date of filing : 27.01.94

(51) Int. Cl.⁵ : **B01J 20/34**, B01J 20/12

(30) Priority : **12.02.93 US 17382**
**10.12.93 US 163140**

(43) Date of publication of application :
**17.08.94 Bulletin 94/33**

(84) Designated Contracting States :
**DE FR GB IT NL**

(71) Applicant : **AMERICAN COLLOID COMPANY**
**One North Arlington, 1500 West Shure Drive**
**Arlington Heights, Illinois 60004 (US)**

(72) Inventor : **Nebergall, Robert S.**
**161 South Lombard Avenue**
**Lombard, State of Illinois 60148 (US)**
Inventor : **Taylor, Dennis R.**
**1217 Prairie Brook,**
**Apartment A2**
**Palatine, State of Illinois 60067 (US)**
Inventor : **Kucharz, Carolyn J.**
**6007 West Ardmore**
**Chicago, State of Illinois 60646 (US)**

(74) Representative : **McCall, John Douglas et al**
**W.P. THOMPSON & CO.**
**Coopers Building**
**Church Street**
**Liverpool L1 3AB (GB)**

(54) **Process for regenerating and optionally carbonizing spent acid-activated smectite clays.**

(57) A process for regenerating spent bleaching clays and acid-activated smectite catalyst granules includes : (1) an extraction step to remove a majority of entrained hydrocarbons, such as oil, preferably about 75% to about 95% by weight of the entrained oil, when regenerating bleaching clays ; (2) an oxidation step to remove the majority of remaining carbonaceous adsorbates which are not removed by the preceding extraction step, and to carbonize a majority of the remaining adsorbates, thereby increasing the adsorption capacity of the clay ; and, optionally, (3) an acid wash step to restore the acidity normally associated with fresh acid-activated bleaching clays. In a second embodiment, the clay is oxidized with $O_2$ at a temperature below about 360°C to carbonize a portion of the hydrocarbons remaining after extraction.

CLAY TREATMENT FLOWSHEET

FIG.16

EP 0 611 071 A1

The present invention is directed to a method of regenerating spent acid-activated smectite clays. In another embodiment, the present invention is directed to a relatively low temperature method of regenerating spent acid-activated smectite clays while, simultaneously, carbonizing a portion of the organic matter contained by the clay to improve the ability of the regenerated and carbonized clay to adsorb organic liquids.

Acid-activated bentonite clays in the form of finely ground powders, commonly called bleaching clays or bleaching earths, are used to adsorb colored pigments, such as carotenoids and chlorophyll, as well as colorless contaminants, such as phospholipids, and hydroperoxides from edible and inedible oils. This process is called "bleaching" and serves both cosmetic and chemical purposes: (i) it reduces color - very clear, almost water white oils are produced that meet with U.S. consumer expectations, and (ii) it stabilizes the oil - both the colored pigments and colorless contaminants tend to destabilize the oil (i.e., cause the oil to become rancid more easily) if they are not removed.

Usually, the bleaching process includes adding a bleaching clay powder to a contaminated oil at levels in the range of about 0.35 to about 3 wt%, depending on the type and quality of oil being processed. The clay/oil mixture then is heated to a temperature in the range of about 90°C to about 120°C for about 20 to 30 minutes, after which time the now "spent" clay is separated from the bleached oil by filtration, using filter presses or pressure leaf filters. Typically, the filter cake resulting from the filtration operation contains the pigments and other contaminants removed from the oil, as well as considerable quantities, for example, about 25 to about 40 wt%, of entrained oil that is difficult to remove from the spent clay.

It is known that when extra processing, such as solvent or lye-extraction, is employed to remove the entrained oil from the spent clay, the extracted oil is of poor quality. In addition, the extra processing involved is both difficult and expensive. Accordingly, most oil refiners choose to dispose of spent bleaching clay from their operations by having it hauled away to landfill sites.

Unfortunately, spent bleaching clays also process rather high surface areas, for example, about 250 to about 350 $m^2/gm$, and when the spent clays are saturated with entrained oils, they can spontaneously ignite. Because of this pyrophoric tendency, oil-laden spent bleaching clays are classified as hazardous landfill materials and premium rates are levied to dispose of them in landfill sites. from the standpoint of the individual refiner whose margins in this highly competitive industry are tight, these extra expenses are an additional and unwanted burden. from the standpoint of municipalities faced with the problems of acquiring and managing landfill sites, they are becoming increasingly stringent regarding the types of materials they will accept for these sites and striving to encourage recycling as a way of reducing demand. However, even though there has been a long felt need in the industry to recycle the oils and the bleaching clays, until the present invention, there has been no solution to this costly problem.

Although the dosage levels of bleaching clays used to process edible and inedible oils are actually quite low, the magnitude of this problem can be appreciated by considering the fact that about 10 million metric tons of edible and inedible oils were processed in the United States in 1990. At an average dosage level of about 0.75 percent by weight bleaching clay, processing would yield about 75,000 metric tons per year of spent clay plus an additional 30,000 metric tons per year of entrained oils that must be disposed of.

One approach to solving the disposal problems associated with the creation of spent bleaching clays from edible and inedible oil refining processes is to regenerate and recycle the spent clay. Although a number of processes have been described for the purpose of accomplishing this objective, all previous processes suffer from the inability to completely regenerate the spent clay. It is important to appreciate that since bleaching clays are used only once in a batch-type operation, if anything less than complete regeneration is accomplished, the economics of performing the regeneration, coupled with the cumulative loss in bleaching activity, would combine, after only a few cycles, to produce a regenerated clay that would be an unattractive alternative to the use of fresh bleaching clay. Table I shown below can be used to illustrate the loss in cumulative regenerated activity at different (constant) regeneration levels.

## TABLE I

| % Regeneration per cycle | % Regenerated activity remaining after cycle | | | | | |
|---|---|---|---|---|---|---|
| | 1 | 2 | 3 | 4 | 5 | 6 |
| 97.5 | 97.5 | 95.1 | 92.7 | 90.4 | 88.1 | 85.9 |
| 95 | 95 | 90.3 | 85.7 | 81.5 | 77.4 | 63.5 |
| 92.5 | 92.5 | 85.6 | 79.1 | 73.2 | 67.7 | 62.6 |
| 90 | 90 | 81.0 | 72.9 | 65.6 | 59.0 | 53.1 |

The use of organic solvents presents a number of environmental and safety problems associated with their use. Included among them are the necessity for having: (1) processing systems which have fire and explosion safeguards; (2) equipment for capturing any vapors that might otherwise escape to the atmosphere; and (3) equipment for separating, purifying and recycling the organic solvents. These requirements all add considerably to the expense of utilizing any regeneration process which might require the use of organic solvents.

The possibility for regenerating spent bleaching earths has been studied by other workers. Bahl and Dayal, *Research and Industry,* 22, 145 (1977), pointed out that the simplest possible method of regenerating bleaching clays after their use in oil refining operations was to subject the oil-soaked clays to a controlled burning operation. They noted, however, that localized overheating of such oil-soaked clays during the burning operation was difficult to control, and further, that no value was derived from the entrained oil. Further, it was reported that with each burning cycle, the activity of the clay declines, and that a portion is lost as fines. Also it was noted that regeneration of finely powdered clays, such as the bleaching powders processed in accordance with the present invention, is rarely economical since the fine powdered clay escapes with the combustion gases during burning.

A number of patents have issued based on organic solvent regeneration, such as disclosed in U.S. Patent Nos. 2,286,815; 2,370,713; and 3,472,786. Fuege and Janssen, *J. Amer. Oil Chemists' Soc.,* 28, 429 (1951), claim 96-97% regeneration of spent bleaching clays when using polar organic solvents, such as alcohols, ethers, and ketones. However, the degree of regeneration drops to the 79-80% range after about 20 cycles.

Some attempts to regenerate spent bleaching clays use both water and organic solvents during the regeneration process. Zerbe U.S. Patent No. 2,352,064 discloses treating the clay with benzene and a benzene-alcohol mixture for regenerating spent clay; and then a water treatment. Likewise, Rhenania French Patent No. 869,534 discloses the use of water at the end of the regeneration procedure, after first washing the clay with an organic solvent, such as benzene or toluene, to remove oil and then using a mixed solvent such as benzene and 10% ethanol for extraction of resinous products. Martin U.S. patent No. 2,328,158 discloses the use of a blend of about 3 parts naphtha and 1 part of a ketone, and water maintained in a proportion of at least 5% to regenerate spent bleaching clays. Other processes disclose the use of organic solvent extractions in conjunction with high temperature heat treatments for spent clay regeneration, as disclosed in British Patent No. 491,338; Swiss Patent No. 237,380; Indian Patent No. 61,157; and German Patent No. 1,941,758.

More recently, Kalam and Joshi *J. Amer. Oil Chemists' Soc.,* 65, 1917 (1988), report utilizing a hexane extraction step followed by high temperature aqueous regeneration, and point out that although numerous processes for regenerating spent bleaching earths already exist, they are either too complicated or too costly. Because of this, the general practice is still to simply discard the spent, oil-saturated material in landfill sites. In the Kalam and Joshi process, the spent, oil-saturated clay is first extracted with hexane and then dried at 110°C for six hours to remove all traces of solvent. Afterwards, the clay is autoclaved at temperatures in excess of 235°C for six hours. Regenerated clay from this process was found to possess about 80% as much bleaching activity as fresh bleaching clay. In a more successful variation of this process *Ibid.,* 65, 1537 (1988), the clay is first extracted with hexane, as before, but then a small partial pressure of oxygen is maintained in the autoclave during the aqueous thermal regeneration. Best results were obtained at low slurry concentrations, e.g., 5 wt% spent clay, when temperatures were in excess of 200°C, with 0.5 MPa of oxygen partial pressure, and conditions maintained for six hours. 100% regenerations were obtained, and could be maintained at that level through at least four cycles.

Waldmann and Eggers, *Ibid.,* 68, 922 (1991), disclose the use of $CO_2$ under supercritical conditions to extract and regenerate spent bleaching clay. Although good removal of oil was achieved (up to 97% in the case of palm oil), carotenoids present in vegetable oils appear not to be removed by this extraction process. The regenerated clay exhibited excellent (100%) efficiency for removing chlorophyll, but only about 50% as much activity as fresh bleaching clay for removing carotenoids, presumably because carotenoids already present were blocking adsorption sites normally used in the removal of the carotenoids. Model U.S. Patent No. 4,124,528 discloses a similar process to regenerate spent activated carbon which had been used to treat waste water.

Simpson, et al. U.S. Patent No. 2,449,016 discloses a regeneration procedure for granulated bleaching clays, used to treat petroleum oils, in which at least some residual matter is carbonized and the clay, together with a coating of activated carbon, is a more active adsorbent than the original clay. The Simpson, et al. '016 patent teach that temperatures of about 900°F to about 1500°F are needed to carbonize the residual oils.

Surprisingly, the process of the present invention for regeneration of bleaching clays eliminates the disadvantages of the high temperature carbonization step of the prior art recycling processes and provides essentially complete regeneration of spent bleaching clays, and acid-activated clay catalysts, while improving the adsorption capacity of the clay by carbonizing at least a portion of the residual organics contained in the clay.

In accordance with another important and prefered aspect of the process of the present invention, granulated acid-activated smectite clay catalysts, e.g., olefin polymerization catalysts and other catalysts, e.g., for alkylation of olefins, in the form of acid-activated smectite clay granules, can be regenerated using the process of the present invention. An acid-activated smectite clay-based catalyst, in granule form, is manufactured by again (twice) acid treating the acid-activated smectite clay to acid bind smaller (fine) once acid-activated smectite particles, and aggregating the twice acid-activated particles to form bound clay particles, in the form of acid-bound granules, having sufficient breaking strength and structural integrity to perform as a olefin polymerization catalyst.

The process of the present invention has substantially increased yield ($\approx$ 100%) due to the capability of recycling all fine clay particles produced in grinding. The bentonite clay-based polymerization catalyst is manufactured by adhering together a plurality of smaller acid-activated bentonite clay particles, using a strong mineral acid, such as $H_2SO_4$, as a binder. An acid-activated bentonite clay having a particle size distribution in the range of about 2 microns to about 200 microns, predominantly (>50%) in the range of about 45 microns to about 130 microns, preferably calcium bentonite, having calcium as a predominant exchangeable action, is mixed with a strong mineral acid, preferably $H_2SO_4$, for the second acid-activation, in an amount of about 1% to about 5% by weight, and water, preferably in an amount of about 50% to about 65% by weight, to form the catalyst. The mixture is subjected to intensive mixing, curing and drying to form strong particles capable of grinding to a desired particle size distribution, e.g., -6 mesh to +60 mesh, U.S. Sieve Series, to form the catalyst. In the intensive mixer, for example, in an Eirich Intensive Mixer, Eirich Machine, Inc., New York, New York, Model DE 29, that includes a wall-scraping mounting arm and high energy rotor, the clay is treated for the second time with acid and water and intensively mixed and aggregated into clumps.

To achieve the full advantage of the present invention, the mixer should be charged with about 55% to about 60% water; 2% to 4% sulfuric acid and about 30% to about 43% by weight acid-activated clay (dry weight basis). Sodium bentonite (not acid-activated) optionally can be included in an amount of about 1% to about 10%, preferably about 5% based on the total weight of feed to the intensive mixer for additional binding of the aggregates formed from clay fines in the intensive mixer. The mixer is operated for about 25 to about 35 minutes and the resulting material is cured, e.g., in a concrete bunker, at ambient temperature, for at least about 12 hours, preferably at least about 24 hours, prior to drying to a preferred moisture content of about 2% to about 3% by weight (dry weight basis) before being bagged in a moisture-impermeable container.

Fines resulting from the grinding step are completely recycled to the intensive mixing stage of the process to achieve 100% yield. Some adjustment of acid content of the mix may be needed to take into account the acid carried into the mix by recycled fines.

The acid-activated smectite clay-based catalyst granules (e.g., formed from acid-activated calcium bentonite), are primarily useful for treating extraction unit extract streams for recovery of aromatic hydrocarbons free from reactive olefins. The clay-based catalyst is characterized by its mildly acidic catalytic activity and at temperatures of between about 150°C and about 200°C (about 300°F to about 400°F), the acid sites on the clay promote polymerization and alkylation of olefins. Such acid-activated smectite clay-based granules also can be regenerated in accordance with the process of the present invention.

## SUMMARY OF THE INVENTION

The present invention is based on the discovery that a spent bleaching clay and acid-activated granules, e.g., used as a polymerization catalyst, can be completely regenerated, while carbonizing residual oil adsorbed by the clay to improve the adsorbency of the clay. The process of the present invention restores a bleaching clay to at least 95%, preferably at least 100%, of its activity for bleaching of carotenoids, particularly β-carotene, and/or chlorophyll. Further, at least two embodiments of the process employ only aqueous solutions throughout, thus alleviating the necessity for expensive fire and explosion safeguards, pollution control equipment, and the separation and purification equipment that would be necessary if organic solvents were utilized in the process. However, organic solvents can be used in the process of the present invention, if so desired.

The process for regenerating spent acid-activated bleaching clays includes: (1) an extraction step to remove a majority of entrained oil, preferably about 75% to about 95% by weight of the entrained oil; (2) an oxidation step e.g. with $O_2$ gas to remove a minor portion of remaining carbonaceous adsorbates which are not removed by the preceding extraction step, and to carbonize a majority of the remaining carbonaceous adsorbates; and optionally, (3) an acid wash step to restore the acidity normally associated with fresh acid-activated bleaching clays. The features of steps 2 and 3 may be combined into a single step by using an appropriate oxidant, for example, a source of acidic protons, such as peracetic acid, and the like.

When used to regenerate granulated acid-activated clays, such as used as a catalyst in the polymerization or alkylation of olefins, the extraction step is unnecessary. Any residual solvent remaining in a spent, granulated acid-activated clay catalyst can be removed easily by heating the spent granules above the vaporization temperature of the solvent or, e.g., allowed to vaporize under ambient drying conditions.

## BRIEF DESCRIPTION OF THE DRAWINGS

Figures 1-6 are graphs showing the percent regeneration, after various stages of the regeneration process (without carbonization), using various solvents, or water, as the extraction medium, with Figure 5 showing the remaining free fatty acids;

Figure 7 is a graph showing the Lovibond red values, after various stages of the regeneration process (without carbonization), also using various extraction solvents, or water, as the extraction medium;

Figure 8 is a graph showing the chlorophyll values, after various stages of the regeneration process (without carbonization), also using various extraction solvents, or water, as the extraction medium;

Figure 9 is a graph showing the free fatty acid content, after various stages of the regeneration process (without carbonization), also using various extraction solvents, or water, as the extraction medium;

Figure 10 is a graph showing the effect of the extraction medium and the effect of the oxidation step using various solvents, or water, for hydrocarbon extraction, without carbonization;

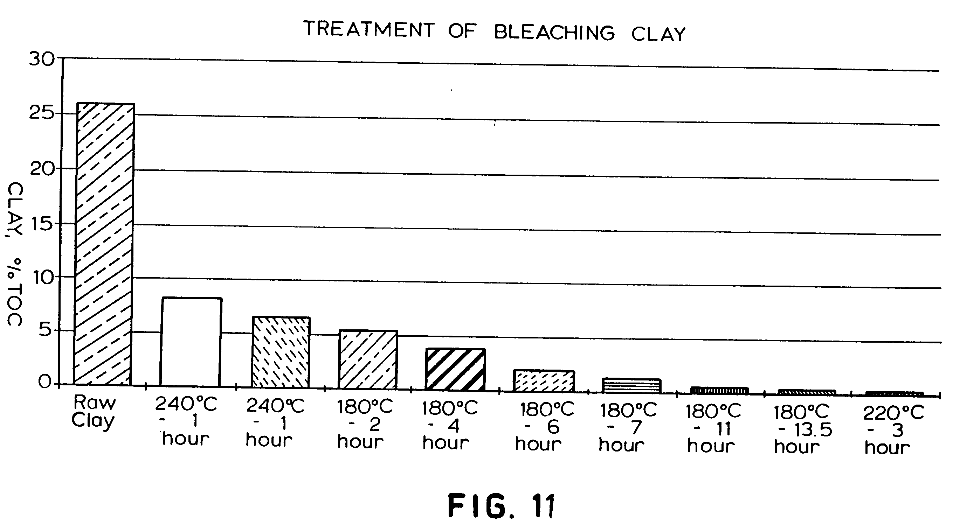

Figure 11 is a bar graph showing the total organic carbon (TOC) remaining in the spent clay after oxidation at various temperatures for varied periods of time;

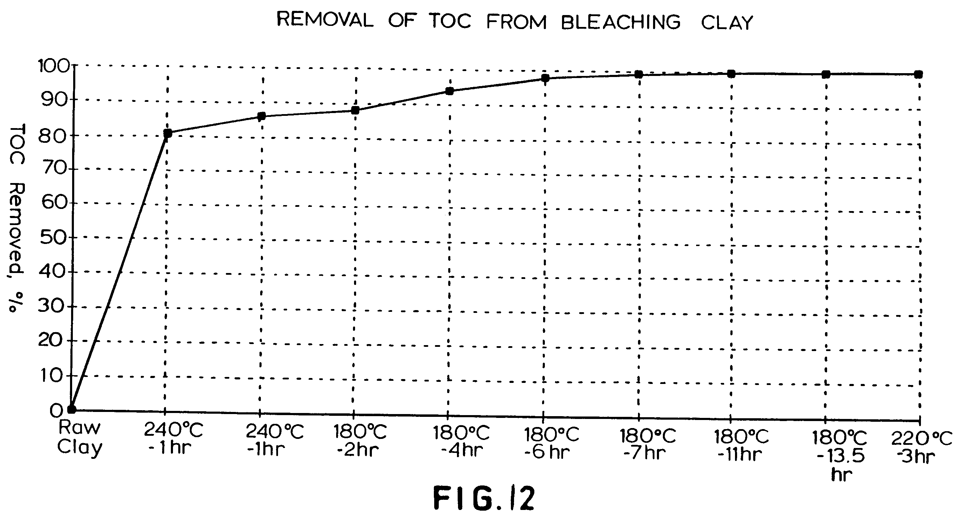

Figure 12 is a graph showing the percent removal of total organic carbon (TOC) when spent clay is oxidized at the temperatures and for the time periods of Figure 1;

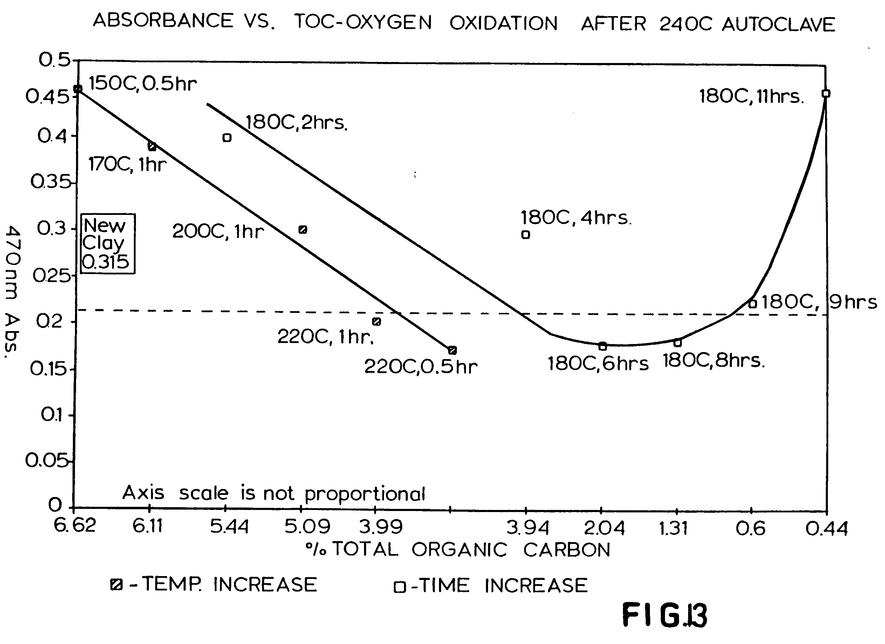

Figure 13 is a graph of absorbance versus total organic carbon (TOC) at various times and temperatures of oxidation of the spent clay after a 240°C water extraction step;

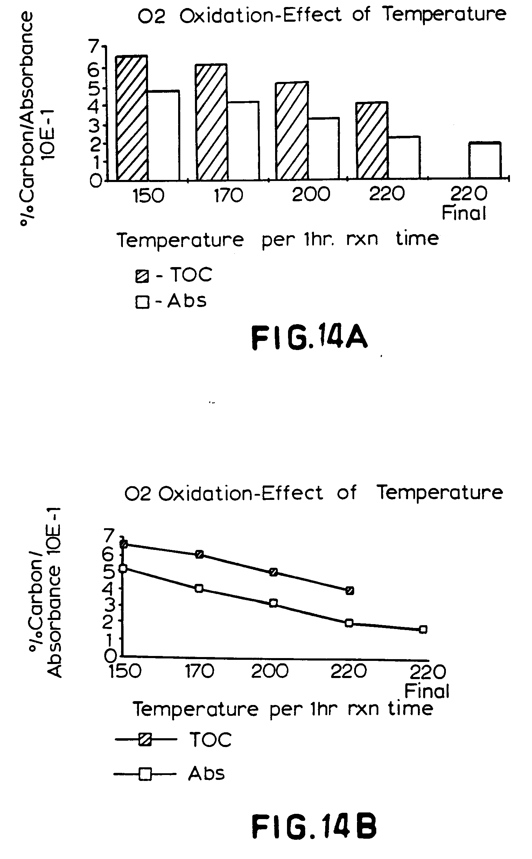

Figures 14A and 14B are graphs showing the effect of $O_2$ oxidation temperature on % total organic carbon (TOC) remaining in the clay, and absorbance (remaining color);

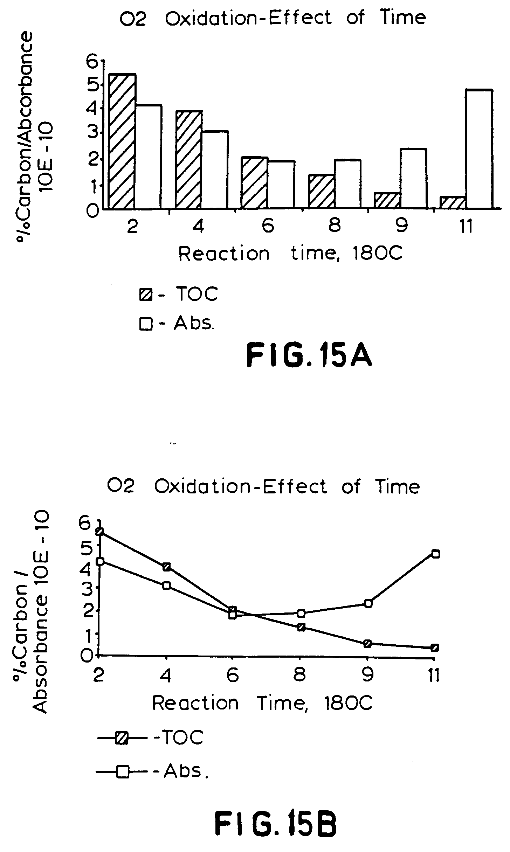

Figures 15A and 15B are graphs showing the effect of $O_2$ oxidation time on % total organic carbon (TOC) remaining in the clay and absorbance (remaining color); and

Figure 16 is a flow diagram showing a spent clay regeneration carbonization process of one embodiment of the present invention.

## DETAILED DESCRIPTION OF THE PREFERRED EMBODIMENTS

When animal or vegetable oils are treated with bleaching clays, the objective is to reduce the levels of certain trace constituents (including carotenoids, such as β-carotene, pheophytins, chlorophyll, and peroxides, metals, such as iron, magnesium and phosphorous, among others). Color pigments, such as β-carotene (reddish-orange pigment) and chlorophyll (green pigment) should be removed if the oil is to be of suitably light color to meet with consumer acceptance. Peroxides, and other highly reactive molecules, should be removed in order to obtain an oil exhibiting good photolytic and chemical stability (i.e., one which will not rancidify easily). It is generally desired that the concentration of chlorophyll remaining in the oil be below about 100 parts per billion. Similarly, it is generally desired that the Lovibond red value be below about 5.

Additionally, it is desired that levels of free fatty acids, produced when contacting vegetable oils with acid-activated bleaching clays, should not be excessively high, since these constitute a refining loss - a loss of valuable oil by conversion to fatty acids. Free fatty acid levels are generally desired to be below 0.1%. The process of the present invention achieves at least 98% regeneration for removal of chlorophyll and/or carotenoids, particularly β-carotene (regenerates the acid-activated clay so that it is capable of removing at least 95% of the chlorophyll and/or carotenoids that the clay was capable of removing prior to its last use as an oil bleaching clay). Further, the process of the present invention provides a coating of carbon on at least a portion of the clay that acts as an additional adsorbent for organic compounds, similar to activated carbon, to increase the adsorbency of the clay to a level greater than its organic compound adsorbency prior to use.

Those familiar with the art of oil bleaching are aware of quality control tests to monitor oil quality during bleaching. Red and yellow color is commonly monitored using an automatic tintometer according to the procedures listed in the American Oil Chemists' Society Official and Tentative Methods (AOCS Official Method Cc 13b-45) or spectrophotometer (AOCS Official Method Cc 13c-50). Other contaminants which are usually measured include chlorophyll (AOCS Official Method Cc 13d-55); peroxides (AOCS Official Method Cd 8-53; rev. Ja 8-87); and free fatty acids (AOCS Official Method Ca 51-40). In all cases, the lower the values obtained, the better the quality of the resultant oil. Typically, for instance, when bleaching a caustic refined soybean oil, refiners find that chlorophyll reduction is the most important quality parameter and, over time, it has been found that adequate bleaching has occurred if this constituent can be reduced to the 50-90 parts per billion (ppb) range. When this level is obtained, other oil constituents are usually well below the levels required for satisfactory finished oil quality.

If a process for regenerating spent bleaching clay is to be successful on both technical and commercial levels, it will be necessary to achieve regeneration levels very close to the 100% level.

## OIL REMOVAL

The first step in the process of the present invention for regenerating spent bleaching clay is the removal of at least a majority of the hydrocarbons, e.g., oil, contained in the spent bleaching clay. A majority of the oil can be removed from the bentonite clay in any manner known in the art. Oil entrained in a bleaching clay can be removed, in accordance with the present invention, by solvent extraction, water extraction, autoclave extraction, caustic extraction, and the like. The rate of contact with a liquid extraction medium is not critical - a lower rate requires more time. Suitable solvent contact rates are, for example, about 100 to about 200 milliliters per hour with lower contact rates also being effective but, perhaps, requiring commercially prohibitive times. Each of these extraction methods, followed by $O_2$ gas oxidation for carbonization and, optionally, acid wash steps, provide a regenerated acid-activated clay having at least 95% of its pre-bleaching activity for chlorophyll and/or carotenoids, and preferably about 99% to about 100%[+] of its pre-bleaching chlorophyll and/or carotenoid removal activity. It should be understood that each of the following oil removal methods can be used more than once, or two or more of the oil removal methods can be used, one after another, to achieve additional oil removal.

## WATER EXTRACTION

Hydrocarbons, such as oil, can be separated from the spent bleaching clay using water, as well known in the art, to provide a clay-in-water slurry and a floating oil layer capable of being decanted from the lower clay/water mixture. Water at room temperature will provide some separation of oil, but better separation is achieved using water at elevated temperatures, e.g., about 80°C to boiling (100°C). Even better separation of oil from the spent bleaching clay is achieved in an autoclave using steam heating at elevated temperature, e.g., at least about 105°C, and saturated steam pressure, preferably at a steam temperature above about 150°C, particularly about 200°C to about 370°C with subsequent gravity settling of the clay and decanting of the oil, as disclosed in *Penninger, J. Chem. Tech Biotechnol.* 1979, 29, pages 154-157, hereby incorporated by reference.

## AUTOCLAVE EXTRACTION

Autoclave separation was performed in a one gallon container having an inert gas ($N_2$) atmosphere using 0.4 kg. spent clay and 0.6 kg tap water, with heating to 240°C for one hour while stirring. After one hour, the heat was turned off and the stirring stopped to allow the clay to settle and cool for one hour. Removal of the oily layer was performed after the clay/water slurry had settled in the autoclave, but while still hot, by means of a dip pipe going into the middle of the autoclave. Most of the water was removed from the clay, after oil decanting, by filtration in a centrifuge. It should be noted that without addition of oxygen gas into the autoclave, this oil extraction step does not produce any carbonization of the residual oil onto the clay surface.

## SOLVENT EXTRACTION

Typical solvents useful for extracting hydrocarbons, such as oil, from a spent acid-activated bleaching clay include non-polar solvents, such as naphtha, benzene or hexane; polar solvents such as acetone, methyl ethyl ketone (MEK) or alcohols, such as ethyl alcohol or anhydrous ethyl alcohol; or a combination of polar and non-polar solvents, such as an equal weight blend of hexane and MEK. Many solvents have been suggested for oil extraction, including alcohols, e.g., $C_1$ to $C_5$ alcohols; ketones; pyridine chlorinated compounds; carbon disulfide and liquid sulfur dioxide. A mixture of polar and non-polar solvents is viable, since the blend of both polar and non-polar solvents provides solubility of both polar and non-polar contaminants from the oil being bleached. Proportions of solvent and oil-laden spent bleaching clays can vary widely depending upon the speed of extraction desired and the extraction apparatus used. Typically, laboratory extractions can be performed in a Soxhlet extractor, using proportions of, for example, 10-15 grams of spent clay per 250-300 milliliters of solvent. Extraction times are, for example, 8 hours, with 5-6 cycles of extraction medium per hour. The clay is then dried, for example, at 70°C for 2 hours.

Three solvent systems (hexane, MEK, and hexane/MEK mixtures) were first tested on some clay samples containing about 25% by weight adsorbed organics (mostly oil). Initial indications were that hexane performed the best. Thus, only a hexane extraction was performed on later spent clay samples.

## CAUSTIC (LYE) EXTRACTION

The fatty acids in oils can be emulsified by aqueous alkali agents used to separate the oil from the clay. For example, the oil-laden clay can be treated for oil extraction by contact with an alkali solution of 1.25 grams of sodium hydroxide in 100 milliliters of deionized (DI) water, to which 50 grams of the spent clay is added, for an aqueous NaOH concentration of 2.5% by weight based on the weight of bleaching clay. Svensson, *J. Am. Oil Chemists' Soc.,* June 1976, Vol 53, pages 443-445, hereby incorporated by reference, suggests extraction by suspending the clay in double its weight of water containing 1.5% to 2.5% by weight of concentrated lye (NaOH) based on the weight of bleaching clay. It should be understood that any water-soluble alkali solution can be used to extract the hydrocarbons from the spent clay so long as the alkali removes a majority of the hydrocarbons from the clay. Suitable examples include:

Li, Na, K, Mg, Ca, and ammonium hydroxides;

primary, secondary and tertiary water-soluble amines, including up to about 8 C atoms in total; alkanolamines; bicarbonates, e.g., Na, K, Mg carbonates;

alkaline silicates - Na, K, e.g., sodium metasilicate, sodium orthosilicate, sodium sesquisilicate;

phosphates, such as sodium or potassium tripolyphosphate, tetrasodium or tetrapotassium pyrophosphate, trisodium or tripotassium phosphate, and disodium or dipotassium phosphate; and

borax (sodium metaborate); or mixtures thereof.

The mixture then is boiled for at least about 10 minutes, preferably about 20 to about 40 minutes. After slight cooling, the oily liquid layer is decanted, followed by washing of the clay by centrifugation using, for example, four 200 milliliter portions of DI water.

## OXIDATION - REGENERATION WITHOUT CARBONIZATION

The spent bleaching clay, as a spent powder or spent granules after the extraction procedure, then is subjected to the oxidation step. In this first embodiment, conditions are selected to avoid carbonization of the remaining hydrocarbons absorbed by the clay. The primary oxidation agent used to collect the data of Tables II and III was 30% by weight hydrogen peroxide. Portions of 5-9 grams of the clay were oxidized in 20 milliliters of 30% hydrogen peroxide, with low heat (e.g., 80-90°C) applied to initiate the reaction. After the reaction subsided, 5 milliliter increments of 30% hydrogen peroxide were added until a total of 40-50 milliliters were consumed. The oxidized clay then was washed by centrifugation using two 200 milliliter sequential washes with DI water. Calcium hypochlorite was used to oxidize the caustic-extracted Universal Edible Oil samples, however, the results were not as favorable as with 30% by weight hydrogen peroxide in water.

It should be understood that any oxidizing agent can be used for this step, in any concentration, so long as the oxidizing agent does not substantially interfere with the oil bleaching efficacy of the regenerated clay. Examples of oxidants, in addition to $H_2O_2$, that are useful in the oxidation step of the process of the present invention include benzoyl peroxide; calcium hypochlorite; peracetic acid; perchloric acid; potassium perchlorate; potassium permanganate; potassium peroxymonosulfate (OXONE); chlorine; sodium hypochlorite; sodium persulfate; and mixtures thereof.

The amount of oxidant is not critical so long as sufficient oxidant is provided for oxidation of preferably at least 98% of the carbon content (e.g., oil, plus carotene plus lecithin of the spent bleaching clay). Alternatively, oxidation sufficient to break down the carbon compounds to molecules that are capable of being washed from the clay would be sufficient. As earlier indicated, a granule catalyst containing extraction hydrocarbons can be depleted of hydrocarbons simply by evaporative drying. The stoichiometric quantity for complete oxidation of carbon from a bleaching clay can be determined easily by trial and error - if additional oxidant concentration provides additional carotene regeneration, the concentration should be increased. A simple calculation for carbon, with assumptions for the composition of the carbon molecules carried by the spent clay, after theh clay was used to bleach soya oil, is as follows:

1. Determine an *average* formula for soya oil (assumes mostly $C_{18}$ chain lengths) at:

$C_{57}H_{101}O_6$ = 881 mw; therefore 78 wt% C

2. Formula for β-carotene at:

$C_{32}H_{60}$ = 444 mw; therefore 86 wt% C

3. Formula for α-lecithin at:

$C_{44}H_{81}PNO_8$ = 782 mw; therefore 68 wt% C

4. Assumed that adsorbate mixture on spent bleaching clay *before extraction* is composed of 50:25:25 mixture of soya oil, β-carotene and α-lecithin

therefore 0.5(78) + 0.25(86) + 0.25(68) =

37.5 + 21.5 + 17 = 76% C

5. Assumed that adsorbate mixture on spent bleaching clay *after extraction* is composed of 50:50 mixture of β-carotene and α-lecithin therefore 0.5(86) + 0.5(68) = 43 + 34 = 77% C

6. Also calculated balanced equations for utilization of hydrogen peroxide to exhaustively oxidize the β-carotene and α-lecithin completely to carbon dioxide and water

(A) $\quad C_{32}H_{60} + 94\ H_2O_2 \Rightarrow 32\ CO_2 \uparrow + 124\ H_2O$

(B) $\quad 2\ C_{44}H_{81}PNO_8 + 258\ H_2O_2 \Rightarrow 88\ CO_2 \uparrow +$

$339\ H_2O + 2\ NO_2 + P_2O_5$

Therefore, if the adsorbate on spent clay after extraction is a 50:50 mixture of these two compounds:

assume 7 grams of β-carotene/100 grams spent clay (see Table III - Fresh ACC clay Lovibond red value)

$$\text{or} \quad 7/444 \quad = \quad 1.577 \times 10^{-2} \text{ mole } \beta\text{-carotene}$$

$$\text{need} \quad \begin{array}{l} 94 \text{ moles} \\ H_2O_2 \text{ per mole} \\ \text{of } \beta\text{-carotene} \end{array} \quad = \quad \begin{array}{l} 1.482 \text{ moles to} \\ \text{completely} \\ \text{oxidize} \\ \beta\text{-carotene} \end{array}$$

$$1.482 \times 34 \text{ mw} \quad = \quad \begin{array}{l} 47.4 \text{ grams } 100\% \\ H_2O_2 = 158 \text{ grams} \\ 30\% \ H_2O_2 \end{array}$$

assume 7 grams of α-lecithin/100 grams of spent clay

$$\text{or} \quad 7/782 \quad = \quad 8.95 \times 10^{-3} \text{ mole } \alpha\text{-lecithin}$$

$$\text{need} \quad \begin{array}{l} 129 \text{ moles} \\ H_2O_2 \text{ per mole} \\ \alpha\text{-lecithin} \end{array} \quad = \quad \begin{array}{l} 1.155 \text{ moles to} \\ \text{completely} \\ \text{oxidize} \\ \alpha\text{-lecithin} \end{array}$$

$$1.155 \times 34 \text{ mw} \quad = \quad \begin{array}{l} 37 \text{ grams } 100\% \\ H_2O_2 = 123 \text{ grams} \\ 30\% \ H_2O_2 \end{array}$$

Therefore, a total of 158 + 123 = 281 grams 30% $H_2O_2$ is required per 100 grams spent clay.

Caustic extraction was performed on both spent clay samples, however, it was necessary to increase the liquid volume for the spent AGP samples, so that 1.85 grams NaOH per 150 milliliters water was used.

## OXIDATION - WITH CARBONIZATION

Most of the hydrocarbons, e.g., oil contained in a spent bleaching clay could be removed by extraction in 240°C water for a period of time of about 1 hour. This extraction step removes about 76-84% by weight of the oil contained by the spent clay. Similarly, extraction at a water temperature of 220°C, removed about 71-78% of the oil.

A second stage water extraction treatment was evaluated for further oil removal prior to oxidation. The tests used carbon dioxide-saturated water, water containing sodium silicate, or water containing the surfactant Triton X-100. This second extraction step removed an additional 21-31% of the oil remaining after the first extraction step. This increased the cumulative oil removal to 85-87%, however, the clay still contained 6-7% TOC.

Further testing indicated that additional oil could be removed from the clay by pressure oxidation at 240°C using oxygen in a water slurry. Surprisingly, a large portion of the oil was carbonized during this test. The effect of oxidation temperature then was evaluated using partially treated clay, having 85% of the oil removed. No oxidation of the oil was noted below 180°C and some carbonization was noted at 220°C. The effect of time at 180°C was evaluated. Approximately 5% of the residual oil was oxidized during each hour that the partially treated clay was at 180°C. Cumulative removal of the oil totaled 99.7%, and 0.44% TOC remained after the 180°C oxidation. Oxidation of this final clay containing 0.44% TOC, at 220°C, did not show evidence of additional carbonization and the residual oil was reduced to 0.33% TOC, 99.8% oil removal.

## TEST PROGRAM

The test program was designed to evaluate a process consisting of three treatment steps. The first step was reaction at high temperature with water to separate the majority of the contained oil from the spent bleaching clay. The second step was to remove additional oil from the clay by high temperature water treatment with the addition of surfactant. The third step of the process was to oxidize the residual oil using oxygen under pressure, i.e., "wet air oxidation." Conditions and results of all tests are tabulated in Table II.

A series of tests was preformed to evaluate the effect of temperature on the first step removal of the oil. These tests evaluated the effect of temperature on the separation of oil from the spent bleaching clay. The tests were performed by adding 200 grams of clay to 1000 mL water, closing the autoclave and heating to temperature. Temperatures of 180°C to 240°C were evaluated. The removal of oil was most efficient at 240°C, as shown in the following temperature summary.

## TEMPERATURE SUMMARY

| Temperature, °C | Residue, % | |
|---|---|---|
| | Estimated Oil | TOC |
| Clay | 41 | 26 |
| 180 | 38 | 25 |
| 200 | 22 | 14 |
| 220 | 19 | 11 |
| 220 | 19 | 10 |
| 220 | 19 | na |
| 240 | 14 | 7.4 |
| 240 | 13.7 | 7.3 |
| 240 | 19.5 | 10.3 |

Note:   Estimated oil is equal to loss on ignition

The first three tests of Table II (Examples 1-3) had the vapor space in the autoclave purged with nitrogen so that the atmosphere would be non-oxidizing. Upon opening of the autoclave after depressurization, the clay contained considerable dissolved (absorbed) gas and mixing of the treated clay, water and oil layers occurred upon degassing. Therefore, on subsequent tests (Examples 4-23) the vapor space was evacuated to about 19-inches mercury vacuum. This also created a non-oxidizing atmosphere and little degassing was observed after the autoclave was depressurized.

## TABLE II

### VEGETABLE OIL REMOVAL FROM CLAY

| Example No.: | Temp °C | Time Hours | Additive | Feed | | Residue | | % Removed | | Cum % Removed | |
|---|---|---|---|---|---|---|---|---|---|---|---|
| | | | | est Oil | TOC | est Oil | TOC | est Oil | TOC | est Oil | TOC |
| 1 | 240 | 1 | | 40.9 | 26.1 | 14 | 7.36 | 77 | 81 | | |
| 2 | 220 | 1 | | 40.9 | 26.1 | 18.8 | 10.92 | 68 | 71 | | |
| 3 | 200 | 1 | | 40.9 | 26.1 | 22.1 | 13.78 | 63 | 64 | | |
| 4 | 180 | 1 | | 40.9 | 26.1 | 38.5 | 25 | 13 | 19 | | |
| 5 | 220 | 1 | | 40.9 | 26.1 | 18.8 | 10.06 | 70 | 78 | | |
| 6 | 220 | 1 | | 40.9 | 26.1 | 18.8 | | 70 | | | |
| 7 | 240 | 1 | | 40.9 | 26.1 | 13.7 | 7.31 | 80 | 83.6 | | |
| 8 | 240 | 1 | | 40.9 | 26.1 | 13.3 | 7.28 | 81 | 83.8 | | |
| 9 | 240 | 1 | | 40.9 | 26.1 | 19.5 | 10.25 | 71 | 75.7 | | |
| 10 | 240 | 1 | $CO_2$ | 15.5 | 8.28 | 13.2 | 6.81 | 19 | 21 | 81 | 85.1 |
| 11 | 240 | 1 | $Na_2SiO_3$ | 15.5 | 8.28 | 10.85 | 6.32 | 37 | 31 | 86 | 87 |

EP 0 611 071 A1

## TABLE II - CONTINUED

## VEGETABLE OIL REMOVAL FROM CLAY

| Example No.: | Temp °C | Time Hours | Additive | Feed | | Residue | | % Removed | | Cum % Removed | |
|---|---|---|---|---|---|---|---|---|---|---|---|
| | | | | est Oil | TOC | est Oil | TOC | est Oil | TOC | est Oil | TOC |
| 12 | 240 | 1 | Triton X-100 | 15.5 | 8.28 | 11.2 | 6.72 | 34 | 26 | 85 | 86 |
| 13 | 150 | 0.5 | Oxygen | 11.8 | 6.62 | 13.2 | 6.62 | | | | |
| 14 | 170 | 1 | Oxygen | | | 13 | 6.11 | | | | |
| 15 | 200 | 1 | Oxygen | | | 12.1 | 5.09 | | | | |
| 16 | 220 | 1 | Oxygen | | | 11.6 | 3.99 | 35 | 64 | 90 | 95 |
| 17 | 180 | 2 | Oxygen | 11.8 | 6.62 | 14.3 | 5.44 | | | | |
| 18 | 180 | 4 | Oxygen | | | 13 | 3.94 | | | | |
| 19 | 180 | 6 | Oxygen | | | 9.3 | 2.04 | | | | |
| 20 | 180 | 7 | Oxygen | | | 6.6 | 1.31 | 51 | 83 | 95 | 99.1 |
| 21 | 180 | 11 | Oxygen | 6.6 | 1.31 | 5.28 | 0.6 | | | | |
| 22 | 180 | 13.5 | Oxygen | | | 5.35 | 0.44 | 26 | 69 | 96 | 99.7 |
| 23 | 220 | 3 | Oxygen | 5.35 | 0.44 | 5.5 | 0.33 | -3 | 25 | 96 | 99.8 |

Note:  Oil is estimated by weight loss on ignition sample dried at 95°C
       TOC is determined on sample dried at 95°C

Essentially no oil separation occurred with the 180°C treatment (Example 4). At 200°C (Example 3), about

12

64% by weight of the oil was separated from the clay. Increasing the temperature to 220°C (Examples 2 and 5) improved the oil separation to 71-78% by weight and at 240°C (Example 1) the separation efficiency was 81%. Three additional tests were performed at 240°C (Examples 7-9) to produce feed material for Step 2 testing. In these tests the spent clay to water ratio was increased to 350 grams clay per 1000 mL water.

The moist cake from the three tests at 240°C (Examples 7-9) were combined and used as feed for Step 2 testing. In the Step 2 tests, 225 grams of wet cake was added to 1000 mL water. In the first test, (Example 6) the autoclave was purged and then pressurized with carbon dioxide. In the other two tests, a surfactant, sodium silicate (Example 11) or Triton X-100 (Example 12), was added to the water and the autoclave vapor space was evacuated prior to the treatment. In all three tests, the mixture was heated to 240°C and held for one hour before cooling and depressurizing. Little difference was noted between the three tests with an additional 21-31% of the oil, as measured by the TOC analysis, being removed.

The oxidation and carbonization, Step 3, then was evaluated using a composite of the residues from the tests that evaluated wetting agents (Examples 10, 11 and 12). The initial oxidation temperature was 150°C (Example 13). The pulp (266 grams filter cake in 1000 mL water) was heated to temperature under 100 psig oxygen pressure with a vapor phase bleed of 200 mL/min $O_2$. After one hour at temperature, a pulp sample was taken and the temperature was raised to 170°C (Example 14). After one hour at 170°C, a second pulp sample was taken and the temperature was raised again (Example 15). The target was 190°C, however an exothermic reaction occurred between 180°C and 190°C that raised the temperature to 200°C. Therefore, the temperature was maintained at 200°C for one hour (Example 15). After sampling, the temperature was raised to 220°C, held for one hour (Example 16) and the pulp sampled. The pulp was allowed to cool and the treated clay was separated from the water layer.

Analysis of the clay samples from the various temperatures indicated no reaction at 150°C, little oxidation at 170°C, some oxidation at 200°C, and efficient oxidation at 220°C. The 200°C sample (Example 15), showed some carbonization of the oil and the 220°C (Example 16) showed more.

A longer test at 180°C (Example 21) then was run for eleven hours at temperature. Cumulative removal of 99.1% of the TOC was achieved. Continuing this oxidation to 13.5 hours (Example 22) increased the TOC removal to 99.7%. Data from these tests are summarized below:

| Example No. | Hours at 180°C | Residue, % | |
| --- | --- | --- | --- |
| | | Estimated Oil (loss on ignition) | TOC |
| | Feed | 12 | 6.6 |
| 17 | 2 | 14 | 5.4 |
| 18 | 4 | 13 | 3.9 |
| 19 | 6 | 9.3 | 2.0 |
| 20 | 7 | 5.5 | 1.3 |
| 21 | 11 | 5.3 | 0.6 |
| 22 | 13.5 | 5.3 | 0.44 |

The final clay from the 13.5 hours at 180°C (Example 22) was heated as a slurry to 220°C under 100 psig oxygen (Example 23). There was no indication of carbonization. Therefore, it appears that the oil fraction that wanted to carbonize was oxidized at 180°C. The clay product also was much lighter color than any of the previous test products. The final clay contained 0.33% TOC and has a loss on ignition of 5.5%.

Samples of all residues that were analyzed for TOC were examined further. These samples were oven-dried at 88°C-93°C. Additional samples included moist rejects from 240°C in water; 240°C in water followed by 240°C with carbon dioxide; oxidation up to 240°C (Examples 13-16), note the carbonization; treated clay from the longer 180°C oxidation (Examples 17-22); followed by the 220°C oxidation (Example 23).

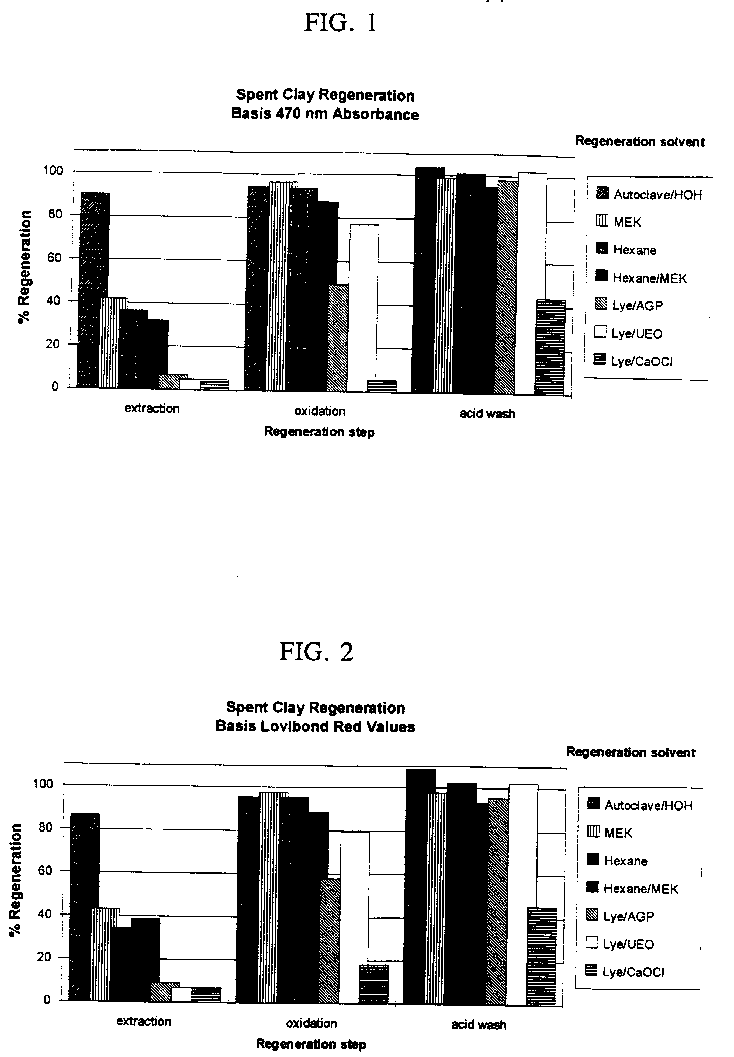

TOC data generated during the test program are shown graphically in Figures 1 and 2. Figure 1 shows the residual percent TOC on the raw and treated clay after each step in the process. The data show a large reduction in TOC from the first 240°C treatment. All subsequent treatments continued to reduce the TOC content of the clay, but not as dramatically as the first step. This large reduction in the first step is more evident in Figure 2, which plots the percent TOC removed versus the process steps.

Essentially 90% of the oil is removed after three relatively short steps: (1) 1-hour at 240°C, (2) 1-hour at 240°C, and (2) 2-hours under oxygen at 180°C. Further reduction in the TOC was relatively slow. It is possible that the small amount of oil removed in the second 240°C treatment may be readily oxidizable. In addition, the oxidation step may be accelerated by increasing the temperature with time. This would allow for the more readily combustible material to be removed at lower temperatures but would be less constrained by slow oxidation of the less combustible components. Also, increased oxygen addition and/or vapor phase bleed may allow for more rapid oxidation.

It was found that while some carbonization occurs at 170°C, the times required for oxidation are too long for commercial efficiency. Accordingly, it is preferred that a temperature of at least about 180°C is used for oxidation, with reaction times at 180°C of at least 4 hours, preferably at least 6 hours. If heated quickly to 220°C, carbonization, or charring, of the organic matter held by the clay occurs very rapidly. The presence of some charred carbon is beneficial to bleaching by acting as activated carbon for adsorption of organic compounds.

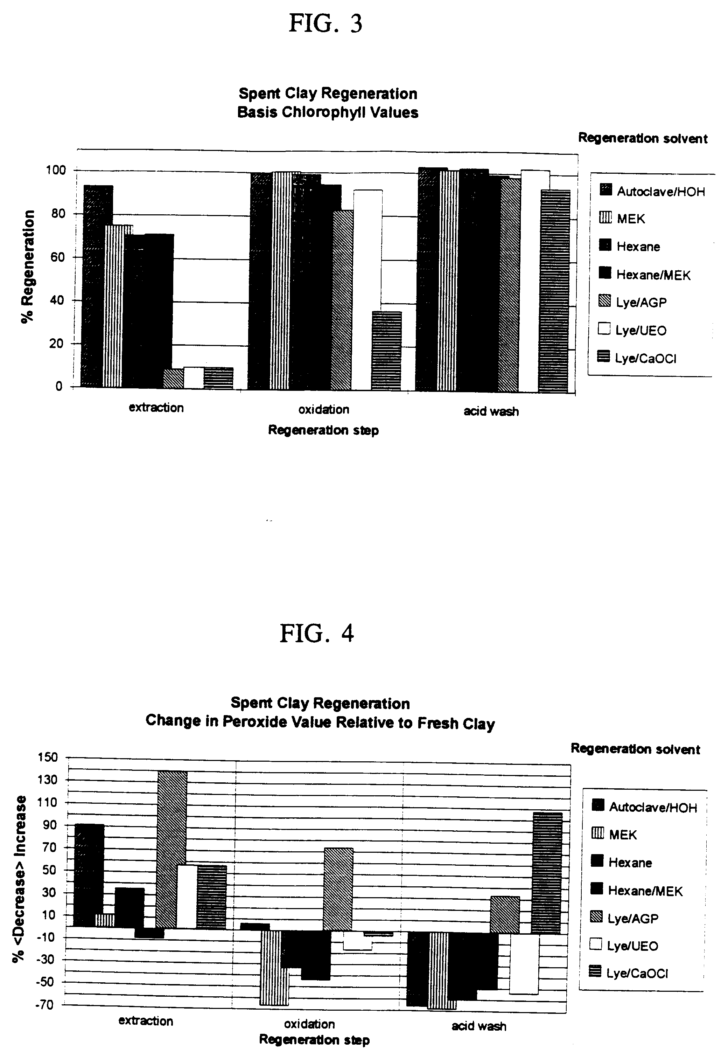

The reactions performed in this study evaluated time and temperature conditions of the oxidation step and the data is presented in the following Examples 24-40, and in Figure 3.

## EXAMPLES 24-40

SPENT CLAY REGENERATION
Source Clay: Soy Oil Refinery
Bleaching Evaluation: 0.75% clay dosage in soy oil

| Example | TREATMENT/STEP | | 470 nm abs. | LOVIBOND | | | Chlorophyll | Free Fatty Acids | | % Carbon TOC |
|---|---|---|---|---|---|---|---|---|---|---|
| | Oxidation | Acid Wash | | Cell | Red | Yellow | | | | |
| 24 | O$_2$ 180°C 2 hrs. | N/A | 0.415 | 5.25" 1" | 4.4 0.9 | 70$^+$ 23 | 82 ppb | 0.050% | | 5.44 |
| 25 | O$_2$ 180°C 4 hrs. | N/A | 0.309 | 5.25" 1" | 3.8 0.8 | 70$^+$ 15 | 69 | 0.050 | | 3.94 |
| 26 | O$_2$ 180°C 6 hrs. | N/A | 0.185 | 5.25" 1" | 2.8 0.6 | 60 7.8 | 41 | 0.045 | | 2.04 |
| 27 | O$_2$ 180°C 8 hrs. | N/A | 0.188 | 5.25" 1" | 2.9 0.6 | 62 .7.8 | 46 | 0.046 | | 1.31 |
| 28 | O$_2$ 180°C 9 hrs. | N/A | 0.232 | 5.25" 1" | 3.1 0.6 | 70$^+$ 11 | 53 | 0.045 | | 0.60 |
| 29 | O$_2$ 180°C 11 hrs. | N/A | 0.468 | 5.25" 1" | 4.2 0.9 | 70$^+$ 27 | 76 | 0.043 | | 0.44 |
| | | | | | | | | | | |
| Control (Fresh Clay) | N/A | N/A | 0.315 | 5.25" 1" | 4.1 0.8 | 70$^+$ 16 | 104 | 0.050 | | 0.19 |

EP 0 611 071 A1

SPENT CLAY REGENERATION
Source Clay:  Soy Oil Refinery
Bleaching Evaluation:  0.75% clay dosage in soy oil

| | TREATMENT/STEP | | | LOVIBOND | | | | | | |
|---|---|---|---|---|---|---|---|---|---|---|
| Example | Oxidation | Acid Wash | 470 nm abs. | Cell | Red | Yellow | Chlorophyll | Free Fatty Acids | | % Carbon TOC |
| 30 | $O_2$ 150°C 0.5 hr. | N/A | 0.470 | 5.25" 1" | 4.8 1.0 | $70^+$ 28 | 99 ppb | 0.057% | | 6.62 |
| 31 | $O_2$ 170°C 1 hr. | N/A | 0.406 | 5.25" 1" | 4.4 0.9 | $70^+$ 23 | 80 | 0.050 | | 6.11 |
| 32 | $O_2$ 200°C 1 hr. | N/A | 0.314 | 5.25" 1" | 3.8 0.8 | $70^+$ 16 | 68 | 0.050 | | 5.09 |
| 33 | $O_2$ 220°C 1 hr. | N/A | 0.211 | 5.25" 1" | 3.1 0.6 | 69 8.7 | 50 | 0.046 | | 3.99 |
| 34 | $O_2$ 220°C final | N/A | 0.180 | 5.25" 1" | 2.9 0.6 | 58 7.2 | 46 | 0.046 | | --- |
| | | | | | | | | | | |
| 35 | $O_2$ 220°C 3 hrs. | N/A | 0.356 | 5.25" 1" | 3.6 0.7 | $70^+$ 19 | 66 | 0.045 | | 0.33 |
| | | | | | | | | | | |

EP 0 611 071 A1

EP 0 611 071 A1

## EXAMPLES 24-40 (CONTINUED)

SPENT CLAY REGENERATION
Source Clay:  Soy Oil Refinery
Bleaching Evaluation:  0.75% clay dosage in soy oil

| | TREATMENT/STEP | | | LOVIBOND | | | | | | |
|---|---|---|---|---|---|---|---|---|---|---|
| Example | Oxidation | Acid Wash | 470 nm abs. | Cell | Red | Yellow | Chlorophyll | Free Fatty Acids | | % Carbon TOC |
| 36 | N/A | N/A | 0.368 | 5.25" 1" | 4.8 0.9 | $70^+$ 18 | 121 | 0.063 | | 7.36 |
| 37 | N/A | N/A | 1.60 | 5.25" 1" | 10 2.4 | $70^+$ $70^+$ | 317 | 0.070 | | 13.78 |
| | | | | | | | | | | |
| 38 | N/A | N/A | 0.539 | 5.25" 1" | 5.5 1.1 | $70^+$ 32 | 152 | 0.052 | | 7.31 |
| 39 | N/A | N/A | 0.430 | 5.25" 1" | 5.0 1.0 | $70^+$ 23 | 131 | 0.052 | | 7.28 |
| 40 | N/A | N/A | 0.625 | 5.25" 1" | 6.1 1.3 | $70^+$ 39 | 142 | 0.070 | | 10.25 |

In the first trial, temperature was raised by increments approximately every hour to 150, 170, 200, and 200°C. In the second trial, the temperature was held at 180°C for 11 hours. (Test was stopped after 8 hours and continued the next day. This interruption should be considered in light of the change in bleaching performance.)

Sample draws were taken after each sequential oxidation step and tested for bleaching (oil decolorization) performance, as measured by 470 nm absorbance. The performance of a fresh sample of commercial bleaching clay is used as a control. (This same commercial clay is the base clay of the spent clay treated in this study.) The control clay produced a de-colorized oil having 0.315 absorbance as determined by the bleaching evaluation test. Regenerated clays which gave a lower bleached oil color, i.e., lower absorbance value, were in fact produced. (Figure 3).

Clays which gave bleaching performances of less than 0.250 relative absorbance were produced under conditions of (1) a constant temperature of 180°C and a reaction time of 6 hours and (2) a sequential increase to 220°C, with 4 hours reaction time. (See Figure 3)

In the experiments performed here, an $O_2$ over pressure of 200 psi was used. This is the pressure above the vapor pressure (550 psi) of the system at the operating temperature used (total pressure = 750 psi).

## RESIDUAL CARBON

Organic content is determined by Loss on Ignition (LOI) and Total Organic Carbon (TOC). TOC values are used to evaluate bleaching data. LOI and TOC values correlate fairly well.

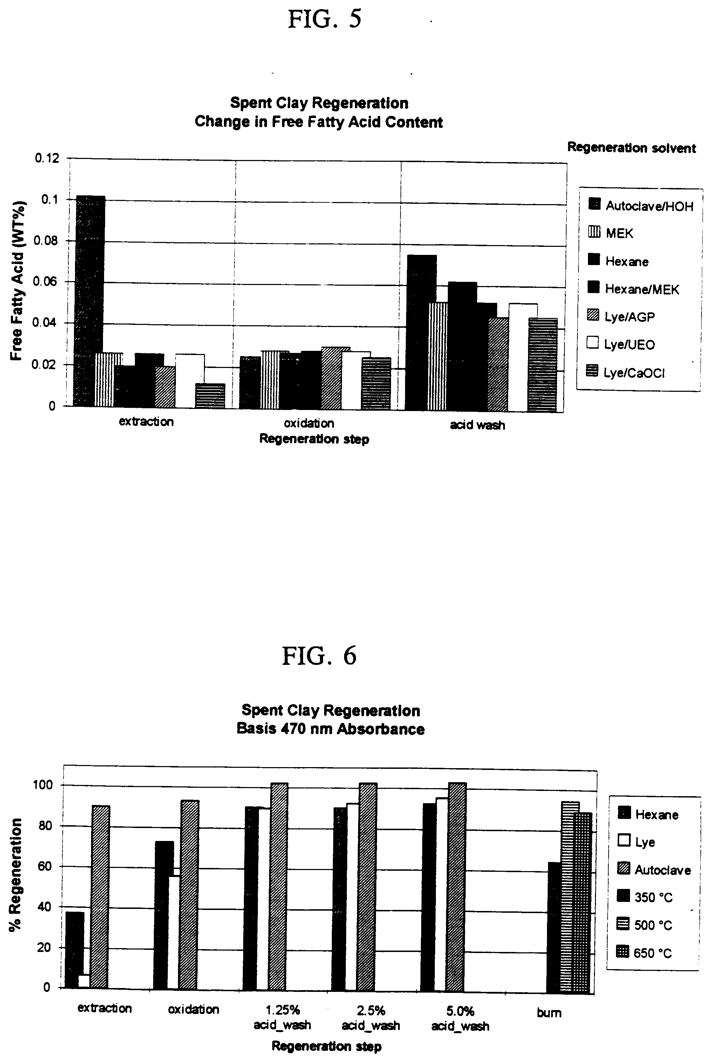

The data here confirms the discovery of the previous study that it is not necessary to reduce carbon levels to near zero values in order to regain bleaching ability. In this study, clays showing good performance had remaining TOC levels of about 1% to about 4%. The increasing temperature/constant time data of Figure 4 shows a continuous increase of bleaching performance and a successive decrease in carbon content, with excellent bleaching performance with 4% carbon, after 0.5 hours at 220°C (Example 33). In comparison, the constant temperature/increasing time data of Figure 5 show that it required 6 hours (Example 26) to reach comparable bleaching performance, but the product had a lower carbon value of 2%. The higher oxidation temperature tolerated more residual carbon, which suggests that operating conditions of temperature and time may affect the character of the carbon.

In the constant temperature/time increase series, there is a decrease in TOC with reaction time, however bleaching performance also decreases, as seen by the 9 and 11 hour trials of Examples 28 and 29. Despite an interruption in the test after 8 hours, the trend should be accurate.

## ACID WASH - WITHOUT CARBONIZATION

Return of the smectite clay surface, whether in powder form or bound granules, to an acidic state is accomplished by treating the clay with a dilute solution of acid, e.g., sulfuric acid. For bleaching clays used to decolorize oils, the acid treatment is accomplished after oil removal and oxidation steps. The dilute acid content is distinct from the concentrated acid, raised temperature procedure initially used to form an acid-activated clay, such as disclosed in this Assignee's U.S. Patent No. 4,717,699.

Whereas initial acid activation requires slurrying the clay in acid at a concentration above about 10% by weight, the acid regeneration step useful on non-carbonized, regenerated bleaching clays in accordance with the present invention is accomplished by contacting the clay with a dilute acid solution, having an acid concentration less than about 10% by weight acid, preferably about 2% to about 8% by weight acid, more preferably about 3% to about 5% by weight acid. The strength of the restoring acid solution and the degree of acid rinsing, after acid regeneration, are two variables that are established by trial and error to restore sufficient acid bleaching or catalyst activity.

A series of acid-washing treatments with the extracted, oxidized spent Universal Edible Oil bleaching clay samples was performed using a wash solution of 30 milliliters of 5% by weight aqueous sulfuric acid to treat 5.5 grams of clay, followed by rinsing with deionized water to achieve a supernatant wash water having a pH of 3.1 to 3.3 in the final wash water, which is typical of the pH of commercial bleaching clays.

In obtaining the data of Tables III and IV, the extracted, oxidized clays were washed with 1.25%, 2.5% and 5.0% by weight strong mineral acid solutions and subsequently rinsed with three 200 milliliter portions of deionized water. Free fatty acid levels were lower with the more dilute washes; however, yellow color and chlorophyll removal ability was decreased slightly with the more dilute washes.

The following Tables and drawings demonstrate the efficacy and the importance of the oil-removal, oxidation and optional acid wash steps of the process of the present invention for regenerating bleaching clays.

## EXAMPLES

Table III presents the results obtained from a series of experiments in which different extraction solvents and oxidants were used to regenerate two different samples of spent bleaching clays obtained from two different edible oil refiners (Universal Edible Oil in Chicago, IL and AGP in St. Joseph, MO). In these experiments, organic solvents as well as aqueous systems were employed to perform the preliminary extraction step. In order to assess the degree of clay regeneration, the spent clays were subjected to a normal laboratory bleaching evaluation using a once-refined soya oil, and the test methods referred to above. Using the data in this table, the bar graphs of the drawings were prepared. The figures illustrate the changes that occur during the three step sequence of the process of the present invention, and illustrate key features of the invention. The data also shows that the two step process is effective, wherein an acid oxidant (peracetic acid) can be used in a single processing step to achieve oxidation and acid washing while providing sufficient regeneration for adsorption of both carotene and chlorophyll.

## TABLE III


## EFFECT OF EXTRACTION SOLVENT AND OXIDANT ON REGENERATION OF SPENT BLEACHING CLAY

| TREATMENT | | BLEACHING PROPERTIES VS. PROCESS STEP | | | | | |
|---|---|---|---|---|---|---|---|
| SOLVENT/ REAGENT | STEP | Abs. | LvR * | LvY ** | CHLOROPHYLL | FFA *** | PV **** |
| | | 470 nm | 1" cell | 1" cell | ppb | wt% | meq/kg |
| Hexane (1) | extraction | 2.48 | 3.7 | 70 | 423 | 0.02 | 7.5 |
| $H_2O_2$ | oxidation | 0.473 | 1 | 28 | 73.4 | 0.027 | 3.7 |
| $H_2SO_4$ (pH 3.1-3.3) | acid wash | 0.2 | 0.7 | 8.2 | 37.4 | 0.062 | 2.2 |
| | | | | | | | |
| MEK (1) | extraction | 2.29 | 3.3 | 70 | 366 | 0.026 | 6.2 |
| $H_2O_2$ | oxidation | 0.364 | 0.9 | 21 | 58.3 | 0.028 | 1.85 |
| $H_2SO_4$ (pH 3.1-3.3) | acid wash | 0.27 | 0.9 | 13 | 46.8 | 0.052 | 1.75 |
| | | | | | | | |
| Hexane/MEK (1) | extraction | 2.64 | 3.5 | 70 | 416 | 0.028 | 5.06 |
| $H_2O_2$ | oxidation | 0.678 | 1.3 | 44 | 130 | 0.031 | 3.1 |

19

| TREATMENT | | BLEACHING PROPERTIES VS. PROCESS STEP | | | | | |
|---|---|---|---|---|---|---|---|
| SOLVENT/ REAGENT | STEP | Abs. 470 nm | LvR * 1" cell | LvY ** 1" cell | CHLOROPHYLL ppb | FFA *** wt% | PV **** meq/kg |
| $H_2SO_4$ (pH 3.1-3.3) | acid wash | 0.412 | 1.1 | 23 | 74.1 | 0.051 | 2.72 |
| | | | | | | | |
| NaOH (1) | extraction | 3.6 | 4.9 | 70 | 1160 | 0.012 | 8.7 |
| $H_2O_2$ | oxidation | 1.05 | 1.7 | 70 | 162 | 0.028 | 4.6 |
| $H_2SO_4$ (pH 3.1-3.3) | acid wash | 0.155 | 0.7 | 6.2 | 36 | 0.045 | 2.54 |
| | | | | | | | |
| NaOH (2) | extraction | 3.53 | 4.8 | 70 | 1170 | 0.02 | 6.52 |
| $H_2O_2$ | oxidation | 2.01 | 2.6 | 70 | 255 | 0.03 | 4.72 |
| $H_2SO_4$ (pH 3.1-3.3) | acid wash | 0.27 | 0.9 | 13 | 63 | 0.045 | 3.62 |
| | | | | | | | |
| NaOH (2) | extraction | 3.53 | 4.8 | 70 | 1170 | 0.02 | 6.52 |
| Peracetic acid | oxidation/ acid wash | 0.695 | 1.6 | 48 | 80 | 0.042 | 2.9 |
| | | | | | | | |
| NaOH (1) | extraction | 3.6 | 4.9 | 70 | 1160 | 0.012 | 8.7 |
| CaOCl | oxidation | 3.58 | 4.4 | 70 | 840 | 0.025 | 5.3 |
| $H_2SO_4$ (pH 3.1-3.3) | acid wash | 2.22 | 3.2 | 70 | 146 | 0.045 | 11.5 |
| | | | | | | | |
| Autoclave/$H_2O$ (2) | extraction | 0.551 | 1.3 | 35 | 127 | 0.102 | 5.2 |
| $H_2O_2$ | oxidation | 0.411 | 0.9 | 23 | 41 | 0.025 | 2.88 |
| $H_2SO_4$ (pH 3.1-3.3) | acid wash | 0.07 | 0.3 | 2.2 | 8 | 0.075 | 0.92 |
| | | | | | | | |
| Autoclave/$H_2O$ (2) | extraction | 0.551 | 1.3 | 35 | 127 | 0.102 | 5.2 |
| Peracetic acid | oxidation/ acid wash | 0.156 | 0.6 | 6.2 | 27 | 0.044 | 1.8 |

| TREATMENT | | BLEACHING PROPERTIES VS. PROCESS STEP | | | | | |
|---|---|---|---|---|---|---|---|
| SOLVENT/ REAGENT | STEP | Abs. | LvR * | LvY ** | CHLOROPHYLL | FFA *** | PV **** |
| | | 470 nm | 1" cell | 1" cell | ppb | wt% | meq/kg |
| | | | | | | | |
| Fresh UEO Clay (1% dosage) | | 0.237 | 0.8 | 11 | 65 | 0.027 | 5.54 |
| Fresh ACC Clay (0.95% dosage) | | 0.207 | 0.7 | 9.1 | 42 | 0.033 | 2.72 |
| Test Oil (3) | | 3.77 | 5.2 | 70 | 1280 | 0.025 | 3.92 |

| | |
|---|---|
| * | Lovibond Red value |
| ** | Lovibond Yellow value |
| *** | Free Fatty Acids value |
| **** | Peroxide value |

(1) Fresh clay and spent clay supplied by Universal Edible Oil (UEO), Chicago, IL.

(2) Spent clay supplied by AGP, St. Joseph, MO; fresh clay ACC Clarion 470 SF (acid activated calcium bentonite) with 5% diatomaceous earth filter aid.

(3) Once refined soya oil, Kraft-Humko.

In Figures 1-3, the degree of regenerated activity achieved at different stages of the regeneration process, when employing different extraction solvents and oxidants, is assessed by comparing the activity of the regenerated clay for adsorbing the two major color pigments ($\beta$-carotene and chlorophyll) to the activity of fresh clay for adsorbing the same pigments. Adsorption of $\beta$-carotene is evaluated using the reduction in spectrophotometric absorbance at 470 nm wavelength and using the Lovibond red value obtained by means of an automatic tintometer. Chlorophyll contents (in ppb) of the test and treated oils were determined by means of the automatic tintometer. The percentage regeneration (% activity) achieved for the evaluation parameters in Figures 1-3 were calculated in accordance with the following formula:

$$\% \text{ Regeneration } = \frac{100 \text{ X (Test oil value } - \text{ Regenerated clay value)}}{\text{(Test oil value } - \text{ Fresh clay value)}}$$

Since, in the case of the peroxides, values obtained using regenerated clays were found sometimes to increase and other times to decrease, the percentage change for the regenerated clays relative to the fresh clay samples also was calculated. Therefore, the percentage increase or decrease in Figure 4 was calculated by means of the following formula:

$$\% \text{ Decrease or Increase } = \frac{100 \text{ x (Fresh clay value } - \text{ Regenerated clay value)}}{\text{(Test oil value } - \text{ Fresh clay value)}}$$

The free fatty acid content of edible and inedible oils treated with acid-activated bleaching earths always increases somewhat due to hydrolysis of some of the ester linkages in the triglyceride (fat) molecules. However, the absolute value of this change is usually quite low (i.e., less than 0.1 wt% free fatty acids generated) and, therefore, a direct plot of the change in free fatty acid content from data in Table I, was plotted in Figure 5.

Referring more particularly to the drawings, Figure 1 illustrates that regeneration for carotene adsorption (470 mm) increases for each step in the process. Although the aqueous autoclave extraction is the most efficient without the oxidation and acid wash steps, followed by the organic solvents and finally the aqueous lye (NaOH) extraction, the less efficient extraction media, e.g., MEK and hexane, are excellent for regeneration when followed by the oxidation and acid wash steps of the present invention. Clearly, however, the acid wash step is required if regenerated activities near the 100% level, e.g., 98%[+], are to be achieved.

Since Lovibond red values are another way for measuring carotene adsorption, it is to be expected, and was found, that the Lovibond red values of Figure 2 closely parallel the 470 mm absorbance values shown in Figure 1. Both Figures 1 and 2 indicate that the CaOCl oxidant, after NaOH extraction, is not as effective as 30% $H_2O_2$ for the regeneration of carotene adsorption sites.

In Figure 3, regeneration of chlorophyll adsorption efficiency is plotted as a function of processing step. Although regenerated activities for the autoclave/HOH and organic solvent extracted clays are essentially restored to full activity by the time of the oxidation step, and even show some additional improvement as a consequence of acid washing, full activities for the lye-extracted materials are not achieved until after the acid wash step. The CaOCl oxidant seems to work better at restoring chlorophyll adsorption sites, but full activity is still not achieved, even after the acid wash step.

As shown in Figure 4, peroxide values decrease for each step in the process, the only exception being the CaOC oxidized sample. Since this graph shows percentage increase or decrease relative to fresh clay, these results indicate that in the majority of cases, peroxide values are even lower (better) by completion of the oxidation step, and are even further improved by the acid wash step, than are usually obtained with a fresh clay. The substantial increase in peroxide value for the CaOCl oxidized material, after the acid wash, is consistent with the fact that peroxide levels for clay-bleached oils are known to increase in the presence of acidified chloride ions. For reasons which are unclear, peroxide values for the lye-extracted AGP sample, although showing improvement over the course of the treatment, still are higher than would be obtained in the case of a fresh clay.

As shown in Figure 5, the acid washing step increases the tendency for the regenerated clay samples to generate free fatty acids via hydrolysis of the ester linkages of the triglyceride molecules of the oil. Although this effect is less pronounced for the lye-extracted materials, it can be seen that regardless of the extraction medium, increases occur in all cases. Typically, it is desirable that free fatty acids not exceed about 0.07 wt%, preferably less than about 0.05 wt% in bleached oil for commercial operations, so it can be seen that all of the oils tested are well within specifications, after oxidation and acid washing.

## TABLE IV

## EFFECT OF STRENGTH OF ACID WASH ON
## REGENERATION OF AGP SPENT BLEACHING CLAY

| TREATMENT | | BLEACHING PROPERTIES VS. PROCESS STEP | | | | | | |
| --- | --- | --- | --- | --- | --- | --- | --- | --- |
| | | (All bleaches at 1 % dosage) | | | | | | |
| SOLVENT/ REAGENT | STEP | Abs. | LvR | LvY | CHLOROPHYLL | FFA | PV | CARBON |
| | | 470 nm | 1" cell | 1" cell | ppb | wt% | meq/kg | wt% |
| Hexane | extraction | 2.44 | 3.8 | 70 | 320 | 0.04 | 6.2 | 10.44 |
| $H_2O_2$ | oxidation | 1.17 | 1.9 | 70 | 96 | 0.025 | 4.2 | 0.6 |
| $H_2SO_4$ (1.25%) | acid wash | 0.544 | 1.2 | 35 | 51 | 0.032 | 2.52 | #N/A |
| $H_2SO_4$ (2.50%) | acid wash | 0.549 | 1.2 | 34 | 58 | 0.04 | 2.3 | #N/A |
| $H_2SO_4$ (5.0%) | acid wash | 0.473 | 1.2 | 31 | 54 | 0.047 | 1.9 | #N/A |
| | | | | | | | | |
| NaOH | extraction | 3.53 | 4.8 | 70 | 1170 | 0.02 | 6.52 | 11.48 |
| $H_2O_2$ | oxidation | 1.77 | 2.7 | 70 | 188 | 0.025 | 4.4 | 3.12 |
| $H_2SO_4$ (1.25%) | acid wash | 0.563 | 1.3 | 35 | 99 | 0.036 | 4.2 | 3.27 |
| $H_2SO_4$ (2.50%) | acid wash | 0.474 | 1.3 | 29 | 93 | 0.038 | 4.06 | 3.41 |
| $H_2SO_4$ (5.0%) | acid wash | 0.366 | 1.1 | 20 | 75 | 0.045 | 3.6 | 3.3 |
| | | | | | | | | |
| Autoclave/$H_2O$ | extraction | 0.551 | 1.3 | 35 | 127 | 0.102 | 5.2 | 10.46 |
| $H_2O_2$ | oxidation | 0.44 | 1.1 | #N/A | 40 | 0.03 | 3.18 | 0.26 |
| $H_2SO_4$ (1.25%) | acid wash | 0.122 | 0.6 | 4.6 | 14 | 0.042 | 1.54 | 0.26 |
| $H_2SO_4$ (2.50%) | acid wash | 0.116 | 0.6 | 4.4 | 16 | 0.051 | 1.36 | 0.27 |
| $H_2SO_4$ (5.0%) | acid wash | 0.097 | 0.5 | 3.4 | 12 | 0.073 | 0.94 | 0.25 |
| | | | | | | | | |
| Hi Temp. Burn | 350°C | 1.47 | 2.9 | 70 | 404 | 0.032 | 5.68 | 7.53 |
| Hi Temp. Burn | 500°C | 0.405 | 1 | 22 | 75 | 0.038 | 2.4 | 0.68 |
| Hi Temp. Burn | 650°C | 0.59 | 1.4 | 42 | 133 | 0.035 | 33.2 | 0.11 |
| | | | | | | | | |
| Spent AGP Clay | | 2.44 | 3.4 | 70 | 334 | #N/A | #N/A | 25.13 |

| TREATMENT | | BLEACHING PROPERTIES VS. PROCESS STEP | | | | | | |
| SOLVENT/ REAGENT | STEP | (All bleaches at 1% dosage) | | | | | | |
| | | Abs. | LvR | LvY | CHLOROPHYLL | FFA | PV | CARBON |
| | | 470 nm | 1" cell | 1" cell | ppb | wt% | meq/kg | wt% |
| Clarion 470 SF (.95% dosage) | | 0.207 | 0.7 | 9.1 | 42 | 0.033 | 2.72 | 0.16 |
| Test Oil (2) | | 3.77 | 5.2 | 70 | 1280 | 0.025 | 3.92 | #N/A |

(1)  Spent clay supplied by AGP, St.Joseph, MO; fresh clay ACC Clarion 470 SF (acid-activated calcium bentonite clay having 5% diatomaceous earth filter aid).

(2)  Once refined soya oil, Kraft-Humko.

Table IV presents data obtained from experiments conducted to regenerate the AGP spent bleaching clay. In these experiments, the degree of acid wash was varied in order to evaluate the effect of the acid wash step on the overall efficacy of the regeneration process. In addition, residual carbon levels on the spent clay versus the different processing steps was also determined. The graphs of Figures 6-10 were generated from the data of Table IV, and illustrate the effects of the process steps of the process of the present invention. Further, Figures 6-10 compare the efficacy of the process of the present invention to a more conventional reactivation accomplished by "burning" the spent clay at three different temperatures: 350°C, 500°C and 650°C.

The graph of Figure 6, in agreement with Figure 1, shows that the extent of carotene adsorption increases for each step in the process. Changing the strength of the acid wash from 1.25% to 5.0% does little to improve the activity of the hexane and autoclave/HOH-extracted samples, but does improve the regenerated activity of the lye-extracted material. In this set of experiments, the autoclave/HOH-extracted material results in regenerated values in excess of 100%. Also plotted are the regenerated values obtained for spent clays which were simply calcined at three different temperatures. Clearly, the temperature of calcination must be controlled. Best results were obtained when the samples were burned at 500°C.

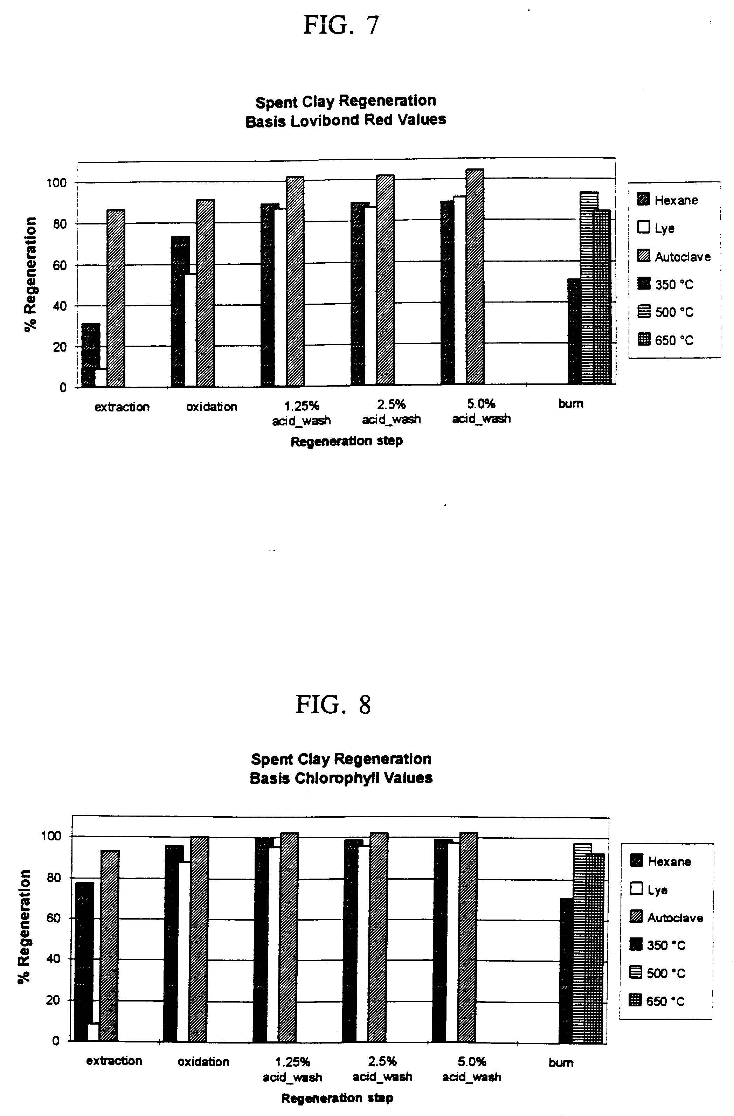

As previously discussed, Lovibond red values are another way for measuring carotene adsorption. The results of the graph of Figure 7 therefore, parallel those shown in Figure 6.

The extent of regenerated chlorophyll adsorption efficiency is plotted in Figure 8. As with Figure 6, the lye-extracted sample exhibits the most improvement by increasing the strength of the acid wash, although both the hexane and the autoclave/HOH-extracted samples are also improved somewhat. The burned samples exhibit the same behavior as previously discussed, showing a better regenerated chlorophyll adsorption activity for the sample calcined at the 500°C mid-range temperature, as opposed to the 350°C low range or 600°C high range temperature.

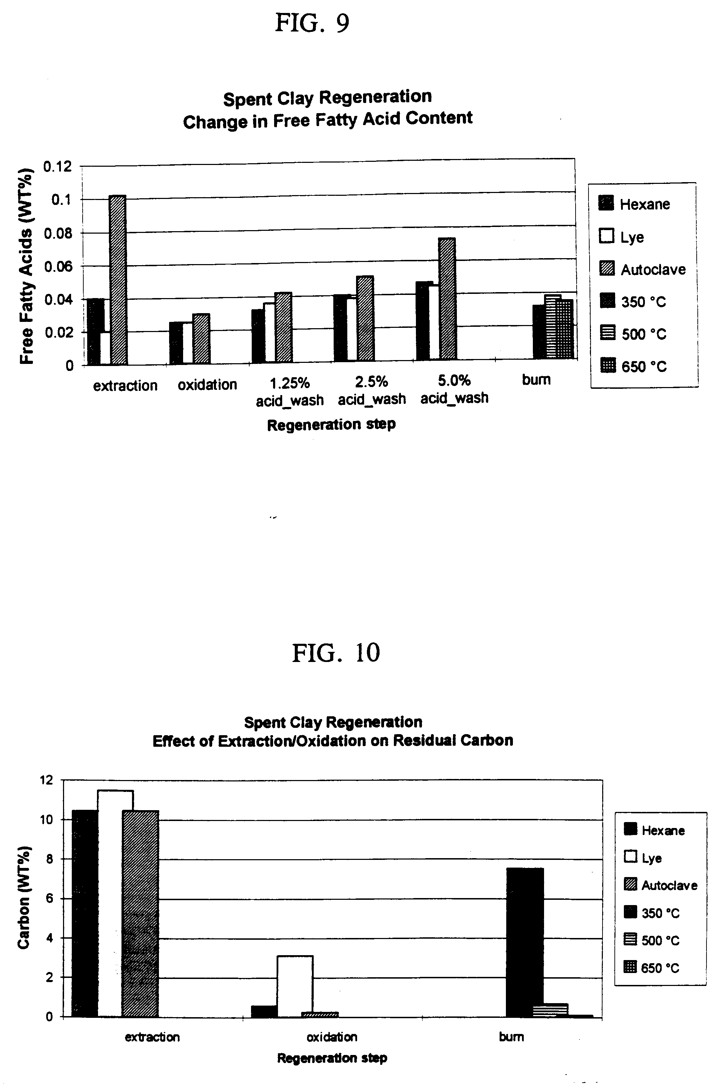

The graph of Figure 9 shows, as with Figure 5, that although the acid washing step does increase the generation of free fatty acids, the extent of the increase is relatively small on an absolute basis and is, in any case, well below the 0.07 wt%, preferably 0.05 wt%, maximum that is normally tolerated for this parameter in commercial operations.

The graph of Figure 10 simply shows the reduction of carbon content associated with the extraction and oxidation steps in the three step process. Since no further reductions seem to occur after the oxidation step (see Table IV), the values for the acid washed materials were not plotted. As expected, calcinations at the higher temperatures yield the lowest residual carbon values for the burned samples.

The three (possibly two) step process of the present invention for regenerating spent acid-activated bentonite bleaching clays possesses numerous technical, economic and procedural advantages over other processes which might be considered for this purpose. They include, but are not restricted to the following: (i) a capability for achieving full (100%) regeneration levels, (ii) the utilization of a totally aqueous system which does not require the use of expensive and flammable organic solvents, (iii) lower production costs (no need to capture volatile organic gases, no need to separate and recycle organic solvents), (iv) lower capital costs (no need to purchase and install expensive explosion proof, capture, separation and distillation systems for safeguarding against fire, for capturing volatile solvents, and for separating and recycling organic solvents.

24

As compared to a process which might employ simple, high-temperature thermal treatment, the process of the present invention has other advantages, including: (v) superior regeneration capability (i.e., in no case is it possible to achieve the 100% regeneration levels required for commercial viability by simple burning), (vi) superior yields of regenerated powders (i.e., finely ground powders are easily carried off with exhaust combustion gases when attempting to regenerate by burning), (vii) superior process control (i.e., regeneration by burning is extremely difficult to control and undercalcination or overcalcination is a common problem), and (viii) superior utilization of by-product waste oil (i.e., at least one-half the entrained oil on the spent clay can be recovered and utilized for other purposes rather than being wasted).

## ACID WASH STEP -- WITH CARBONIZATION

In previous studies, it was found that the acid wash step was very important. At that time, it was desired to reduce residual carbon to values less than 1%, so it is suspected that acid wash will improve bleaching performance of material with low TOC values. The samples studied that included carbon hydrocarbons were not acid washed. Residual carbonized material, however, has an acidic character, and will thus contribute to the surface acidity of the treated clay.

## OXIDANTS STUDIED FOR CARBONIZATION

The use of $O_2$ gas, or the use of peroxide as the oxidant, was investigated. A combination of oxygen and peroxide treatment also showed good results. This combination used less peroxide, thus lowering the chemical cost of the peroxide. While the results found in this study show good results with oxygen only, it has already been found that the nature of spent clay can vary substantially, where some spent clays will require more vigorous regeneration conditions and a second oxidation agent, *e.g.*, $H_2O_2$, may be needed.

## PROCESS FLOWSHEET

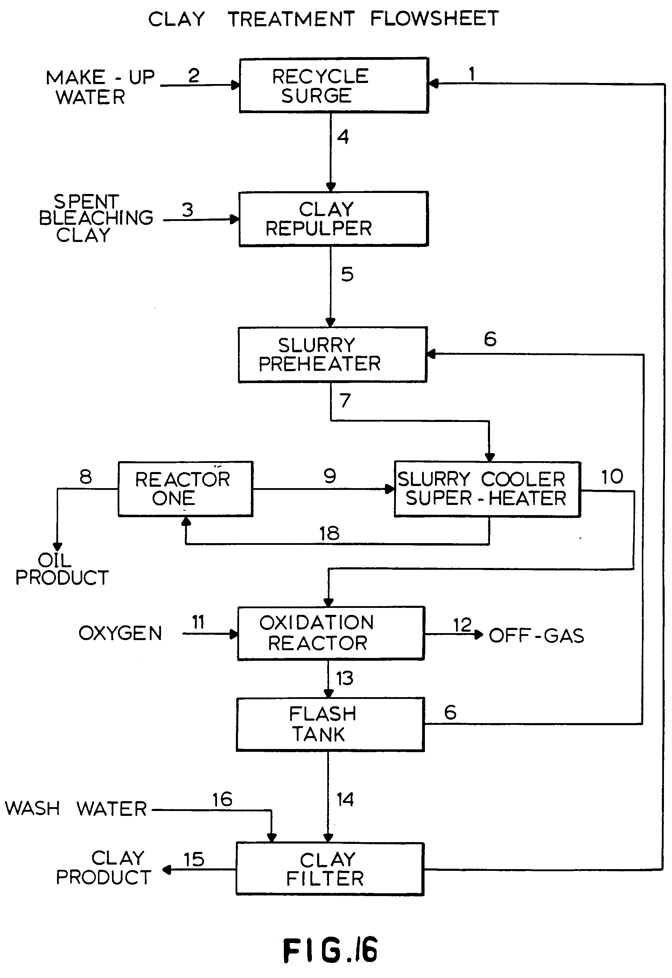

The data reported above, for carbonized bleaching clays, indicate that an initial, preferred hydrocarbon removal step at 240°C can be followed by an extended oxidation step. A schematic flowsheet was developed for a two-stage system that includes heat exchangers to conserve heat. The schematic flowsheet is shown in Figure 16.

As shown in Figure 16, the spent clay is pulped in recycling water at 25% solids (the oil in the clay is counted as solids) and preheated in two stages before entering Reactor One where the temperature is raised to 240°C. The first preheat stage preferably uses flashed vapor and the second preheat stage preferably uses discharge from Reactor One. An oil product is collected from the Reactor One stage. The clay-water slurry then advances through one stage of cooling through a heat exchanger to enter the Oxidation Reactor that is operated at about 180°C to about 370°C. The Oxidation Reactor preferably would be a series of connected reactors operating at the same pressure, but with the temperature increasing in successive reactors. The clay-water slurry from the Oxidation Reactor then is flashed to atmospheric conditions to cool the clay and generate a vapor to use in pre-heating the clay-water slurry advancing to Reactor One. The flashed slurry then is filtered and washed.

A preliminary mass and energy balance was prepared for a treatment system. A dry, de-oiled feed weight of 100 lb/min was assumed. This rate totals 15,000 tons per day on a 250-day year at 83% on stream. The oil content assumed was 72 lb/min and the water was 4 lb/min.

Assumptions used in the mass balance include 81% removal of the oil in Reactor One, 2% oxygen in the bleed from the Oxidation Reactor, 90% oxidation of the residual oil in the Oxidation Reactor, 50% moisture in the treated clay filter cake, and one displacement wash on the filter.

A summary of the flows and temperatures is shown below:

| | | | |
|---|---|---|---|
| 1. | Recycle water | 47 gpm | 78°C |
| 2. | Make-up water | 15 gpm | 20 |
| 3. | Bleaching clay | 22 gpm (176 lb/min) | 20 |
| 4. | Pulping water | 62 gpm | 63 |
| 5. | Clay pulp | 84 gpm | 62 |
| 6. | Flashed steam | 1200 scfm | 100 |
| 7. | Heated clay pulp | 93 gpm | 120 |
| 8. | Separated oils | 13 gpm | 240 |
| 9. | Clay-oil-water | 99 gpm | 240 |
| 10. | Cooled clay-oil | 92 gpm | 180 |
| 11. | Oxygen | 460 scfm (41.1 lb/min) | 20 |
| 12. | Combustion off-gas | 3260 scfm | 180 |
| 13. | Clean clay slurry | 72 gpm | 180 |
| 14. | Flashed clay slurry | 60 gpm | 100 |
| 15. | Clay product | 25 gpm | 78 |
| 16. | Wash water | 12 gpm | 20 |
| 17. | Superheated pulp | 99 gpm | 175 |

The heat balance for the mass balance is not quite correct as it lacks some thermodynamic data for the vegetable oils. The flowsheet will require more heat input to Reactor One than that shown below, but most of this heat can be recovered from the 240°C oil product.

Two to ten percent heat losses were used with each of the steps. The energy requirements are:

Reactor One      1,184 kcal/hr (4,720 BTU/hr)

Excess heat is available from the oxidation reactor:

Oxidation Reactor        800 kcal/hr (3,200 BTU/hr)

Unrecovered heat from the system includes:

Combustion off-gas      2,630,000 kcal/hr (10,480,000 BTU/hr)

Reagent/utility requirements:

Water      27 gpm

Oxygen    41.1 lb/min, 59,000 lb/day, 30 tpd

## ACID WASH (OPTIONAL IF CARBONIZED)

Return of the smectite clay surface, whether in powder form or bound granules, to an acidic state is accomplished by treating the clay with a dilute solution of acid, e.g., sulfuric acid. For bleaching clays used to decolorize oils, the acid treatment is accomplished after the oil removal and oxidation steps. The dilute acid content is distinct from the concentrated acid, raised temperature procedure initially used to form an acid-activated clay, such as disclosed in this Assignee's U.S. Patent No. 4,717,699. Whereas initial acid activation requires slurrying the clay in acid at a concentration above about 10% by weight, the acid regeneration step of the present invention may be accomplished by contacting the clay with a dilute acid solution, having an acid concentration less than about 10% by weight acid, preferably about 2% to about 8% by weight acid, more preferably about 3% to about 5% by weight acid. The strength of the restoring acid solution and the degree of acid rinsing, after acid regeneration, are two variables that are established by trial and error to restore sufficient acid bleaching or catalyst activity.

Numerous modifications and alternative embodiments of the invention will be apparent to those skilled in the art in view of the foregoing description. Accordingly, this description is to be construed as illustrative

26

only and is for the purpose of teaching those skilled in the art the best mode of carrying out the invention. The details of the process may be varied substantially without departing from the spirit of the invention, and the exclusive use of all modifications which come within the scope of the appended claims is reserved.

## Claims

1. A method of regenerating a spent acid-activated clay, after said clay has adsorbed hydrocarbon and carotenoid and/or chlorophyll contaminants from said oil, for further adsorption of carotenoids and /or chlorophyll, comprising the steps of:

   removing a majority of said hydrocarbon from said spent acid-activated clay; and

   oxidizing said clay, after said hydrocarbon removal step, to a degree sufficient such that the capacity to adsorb carotenoids and/or chlorophyll is restored to at least 98% of its original activity for adsorption of carotenoids and/or chlorophyll.

2. A method as claimed in claim 1, wherein hydrocarbon is removed from said spent clay by extraction with water.

3. A method as claimed in claim 2, wherein the extraction water has a temperature in the range of about 100°C to about 370°C, at a pressure in the range of about 15 psia to about 3053 psia in an enclosed vessel.

4. A method as claimed in claim 3 in which said extraction is carried out without addition of $O_2$ vessel.

5. A method as claimed in claim 3 to 4, in which said extraction is carried out while essentially excluding $O_2$ gas from contacting said spent clay during the water extraction step of the method.

6. A method as claimed in any one of claims 2 to 5, wherein the extraction water has a temperature in the range of about 150°C to about 250°C, at a pressure in the range of about 65 psia to about 580 psia.

7. A method as claimed in claim 1, wherein hydrocarbon is removed from the spent clay by extraction of the hydrocarbon with an aqueous solution of an alkali.

8. A method as claimed in any one of the preceding claims, wherein oxidation is carried out by contact of the acid-activated clay, after the hydrocarbon removal step, with an aqueous oxidant solution selected from the group consisting of $H_2O_2$, CaOCL, Benzoyl peroxide, peracetic acid, perchloric acid, potassium perchlorate, potassium permanganate, potassium peroxymonosulfate, sodium hypochorite, sodium persulfate, and mixtures thereof.

9. A method as claimed in any one of the preceding claims, wherein both oxidation and acid washing are accomplished by washing the clay with an aqueous solution of an acidic oxidant.

10. A method as claimed in claim 7, wherein the acidic oxidant comprises peracetic acid.

11. A method as claimed in any one of claims 1 to 7, wherein oxidation is carried out by contact of the acid-activated clay, after the hyrocarbon removal step, with $O_2$ gas flowing in a head space of an oxidation vessel for a time sufficient to carbonize a portion of the hydrocarbons remaining after the hydrocarbon removal step.

12. A method as claimed in claim 11, wherein the acid-activated clay and water contained in the oxidation vessel further includes a liquid oxidant selected from the group consisting of $H_2O_2$, CaOCL, benzoyl peroxide, peracetic acid, perchloric acid, potassium perchlorate, potassium permanganate, potassium peroxymonosulfate, sodium hypochlorite, sodium persulfate, and mixtures thereof.

13. A method as claimed in any one of the preceding claims, further including:

    carbonizing a portion of the remaining hyrocarbons contained by the clay by oxidation with $O_2$ at a temperature below about 360°C, after said hydrocarbon removal step.

14. A method as claimed in any one of the preceding claims, further including the steps of:

    mixing the spent clay with water;

    preheating the spent clay/water mixture, prior to extraction, to a temperature of about 100°C to about 250°C and directing the preheated clay and water to an extraction vessel for removal of a majority of the hydrocarbons;

heating the spent clay and water in the extraction vessel to a temperature of about 180°C to about 370°C to separate a majority of the hydrocarbons from the clay;

removing the separated hydrocarbons from the extracted clay;

recirculating a portion of the heated water to the spent clay for preheating the spent clay prior to extracting the hydrocarbons from the clay;

heating the extracted clay, together with some of the water from the extraction step to a temperature of about 180°C to about 360°C, in an oxidation vessel, for a time sufficient to carbonize a portion of the remaining hydrocarbons held by the clay such that the clay is coated with at least 1% by weight carbon, based on the dry weight of the oxidised clay to restore the clay to at least 100% of its hydrocarbon adsorption capacity prior to oil adsorption; and

removing water from the regenerated clay.

15. A method as claimed in claim any one of the preceding claims, wherein the hydrocarbon is removed from said spent clay by solvent extraction.

16. A method as claimed in claim 15, wherein the spent clay is extracted by a solvent selected from the group consisting of hexane. methly ethyl ketone and mixtures thereof.

17. A method as claimed in any one of the preceding claims, wherein the hydrocarbon comprises oil.

18. A method as claimed in any one the preceding claims, further including the step of acid washing the clay after the hydrocarbon removal and oxidation steps.

19. A method as claimed in any one of the preceding claims, further including collecting the separated hydrocarbons for further use.

## FIG. 1

**Spent Clay Regeneration
Basis 470 nm Absorbance**

## FIG. 2

**Spent Clay Regeneration
Basis Lovibond Red Values**

FIG. 3

Spent Clay Regeneration
Basis Chlorophyll Values

FIG. 4

Spent Clay Regeneration
Change in Peroxide Value Relative to Fresh Clay

# FIG. 5

**Spent Clay Regeneration**
**Change in Free Fatty Acid Content**

# FIG. 6

**Spent Clay Regeneration**
**Basis 470 nm Absorbance**

# FIG. 7

**Spent Clay Regeneration**
**Basis Lovibond Red Values**

# FIG. 8

**Spent Clay Regeneration**
**Basis Chlorophyll Values**

## FIG. 9

**Spent Clay Regeneration
Change in Free Fatty Acid Content**

## FIG. 10

**Spent Clay Regeneration
Effect of Extraction/Oxidation on Residual Carbon**

TREATMENT OF BLEACHING CLAY

CLAY, % TOC

Raw Clay | 240°C - 1 hour | 240°C - 1 hour | 180°C - 2 hour | 180°C - 4 hour | 180°C - 6 hour | 180°C - 7 hour | 180°C - 11 hour | 180°C - 13.5 hour | 220°C - 3 hour

FIG. 11

EP 0 611 071 A1

REMOVAL OF TOC FROM BLEACHING CLAY

FIG.12

ABSORBANCE VS. TOC-OXYGEN OXIDATION AFTER 240C AUTOCLAVE

FIG.13

☒ - TEMP. INCREASE          □ - TIME INCREASE

O2 Oxidation-Effect of Temperature

FIG.14A

O2 Oxidation-Effect of Temperature

FIG.14B

## O2 Oxidation-Effect of Time

**FIG. 15A**

## O2 Oxidation-Effect of Time

**FIG. 15B**

## CLAY TREATMENT FLOWSHEET

FIG.16

**European Patent Office**

## EUROPEAN SEARCH REPORT

Application Number

EP 94 30 0625

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-2 236 679 (FERGUSON)<br>* page 1, column 1, line 42-51 *<br>* page 1, column 2, line 54 - page 2, column 2, line 57 * | 1-6 | B01J20/34<br>B01J20/12 |
| A | US-A-2 854 406 (DEFOE)<br><br>* column 8; claims 1-3 * | 1,11,13, 14,17,18 | |
| A | US-A-1 806 690 (G. KRÖNER)<br>* column 1, line 24 *<br>* column 2; claims 1-3 * | 1,8 | |
| A | NL-C-50 153 (NEDERL. RAFFINADERIJ VAN PETROLEUMPROD.)<br>* page 1, line 19-31 * | 1,8 | |
| A | US-A-1 654 629 (BAYLIS)<br>* page 3; claims 1-6 * | 1 | |
| A | US-A-1 822 303 (MILLER)<br>* page 4-5; claims 1-22 * | 1,3-5 | TECHNICAL FIELDS SEARCHED (Int.Cl.5) |
| A | US-A-1 763 167 (LOWERY) | | B01J |
| A | DE-C-605 736 (GERSTENBERG)<br>* page 3; claims 1-3 * | 1,7,15 | |
| A | US-A-1 562 550 (HALL) | | |
| A | DATABASE WPI<br>Week 7629,<br>Derwent Publications Ltd., London, GB;<br>AN 76-55256X<br>& JP-A-51 065 133 (NISSHIN OIL MILLS)<br>* abstract * | 1,15,16 | |

The present search report has been drawn up for all claims

| Place of search | Date of completion of the search | Examiner |
|---|---|---|
| THE HAGUE | 3 June 1994 | Wendling, J-P |